# EUROPEAN PATENT APPLICATION

(11) **EP 3 309 667 A1**
(43) Date of publication of application: **18.04.2018**
(21) Application number: 17195736.8
(22) Date of filing: 10.10.2017
(51) Int. Cl.: G06F 3/048, G06F 21/32, G06K 9/00

(54) **ELECTRONIC DEVICE HAVING PLURALITY OF FINGERPRINT SENSING MODES AND METHOD FOR CONTROLLING THE SAME**

(30) Priority: 11.10.2016 KR 20160131076
(71) Applicant: Samsung Electronics Co., Ltd., Gyeonggi-do 16677 (KR)
(72) Inventor: LEE, Siwoo, Gyeonggi-do 16677 (KR); KIM, Jeongseob, Gyeonggi-do 16677 (KR); KIM, Hyeonho, Gyeonggi-do 16677 (KR); HAN, Yonggil, Gyeonggi-do 16677 (KR)
(74) Representative: HGF Limited

(57) **Abstract**

An electronic device is provided. The electronic device includes a touch screen, a fingerprint recognition sensor disposed on a region of the touch screen, and a processor. The processor is configured to identify contextual information associated with a fingerprint input from the fingerprint sensor. When the contextual information satisfies a first condition, the processor is further configured to activate the fingerprint recognition sensor to operate in a first sensing mode and obtain fingerprint information from the fingerprint based on the first sensing mode. When the contextual information satisfies a second condition, the processor is further configured to activate the fingerprint recognition sensor to operate in a second sensing mode and obtain fingerprint information from the fingerprint based on the second sensing mode.

## Description

### TECHNICAL FIELD

The present disclosure relates to an electronic device having a plurality of fingerprint sensing modes and a method for controlling the fingerprint sensing modes.

### BACKGROUND

With the increasing use of electronic devices such as mobile terminals, a great variety of functions are provided to such electronic devices.

For example, electronic devices perform a user security and authentication function based on a password entry, pattern recognition, fingerprint recognition, or the like.

A typical electronic device has a touch type fingerprint recognition sensor and a swipe type fingerprint recognition sensor independently to perform an authentication function for security of the device.

Unfortunately, this may deteriorate the usability of the electronic device since the fingerprint recognition sensors of different types have different actions for fingerprint recognition to perform the authentication function.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device having a plurality of fingerprint sensing modes and a control method thereof in which a processor implements both touch and swipe modes through one fingerprint recognition sensor by controlling a fingerprint sensing region of the sensor.

In accordance with an aspect of the present disclosure, an electronic device is provided. The electronic device includes a touch screen, a fingerprint recognition sensor disposed on a region of the touch screen, and a processor. In the electronic device, the processor may be configured to identify contextual information associated with a fingerprint input from the fingerprint recognition sensor, when the contextual information satisfies a first condition, activate the fingerprint recognition sensor to operate in a first sensing mode and obtain fingerprint information from the fingerprint recognition sensor based on the first sensing mode, and when the contextual information satisfies a second condition, activate the fingerprint recognition sensor to operate in a second sensing mode and obtain fingerprint information from the fingerprint recognition sensor based on the second sensing mode.

In accordance with another aspect of the present disclosure, a method for controlling an electronic device having a touch screen, a fingerprint recognition sensor disposed on a region of the touch screen, and a processor is provided. The method may include identifying contextual information associated with a fingerprint input of the fingerprint recognition sensor, when the contextual information satisfies a first condition, determining to operate the fingerprint recognition sensor in a first sensing mode, when the contextual information satisfies a second condition, determining to operate the fingerprint recognition sensor in a second sensing mode, and obtaining fingerprint information from the fingerprint input through the fingerprint recognition sensor.

In accordance with another aspect of the present disclosure, a non-transitory computer-readable recording medium having, recorded thereon, a program is provided. The non-transitory computer-readable recording medium includes instructions of identifying contextual information associated with a fingerprint input of a fingerprint recognition sensor, when the contextual information satisfies a first condition, determining to operate the fingerprint recognition sensor in a first sensing mode, when the contextual information satisfies a second condition, determining to operate the fingerprint recognition sensor in a second sensing mode, and obtaining fingerprint information from the fingerprint input through the fingerprint recognition sensor.

In accordance with another aspect of the present disclosure, the processor may control the fingerprint sensing region of the single fingerprint recognition sensor to provide both the touch mode and the swipe mode.

In accordance with another aspect of the present disclosure, the electronic device may control the sensing mode of the fingerprint recognition sensor based on various fingerprint input types from the user, thereby facilitating the security and authentication of the electronic device and enhancing the usability of the fingerprint recognition sensor.

In accordance with another aspect of the present disclosure, the fingerprint recognition sensor may require only one fingerprint recognition operation to simultaneously perform particular functions such as user authentication, security inactivation, and execution of an application by the electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a network environment according to various embodiments of the present disclosure;
FIG. 2 is a block diagram illustrating an electronic device according to various embodiments of the present disclosure;
FIG. 3 is a block diagram illustrating a program module according to various embodiments of the present disclosure;
FIG. 4 is a block diagram illustrating an electronic device according to various embodiments of the present disclosure;
FIG. 5 is a diagram illustrating the configuration of a fingerprint recognition sensor disposed at a partial region of a touch screen in an electronic device according to various embodiments of the present disclosure;
FIG. 6 is a diagram illustrating a configuration of a sensing array of a fingerprint recognition sensor according to various embodiments of the present disclosure;
FIG. 7 is a diagram illustrating a connection relationship among a fingerprint recognition sensor, a mode selector, and a processor according to various embodiments of the present disclosure;
FIG. 8 is a diagram illustrating an example of setting a fingerprint sensing array of a fingerprint recognition sensor according to various embodiments of the present disclosure;
FIG. 9 is a diagram illustrating a configuration of a sensing array of a fingerprint recognition sensor according to various embodiments of the present disclosure;
FIG. 10 is a diagram illustrating an example of setting a fingerprint sensing array of a fingerprint recognition sensor according to various embodiments of the present disclosure;
FIG. 11 is a diagram illustrating an example of setting a sensing array, when a fingerprint recognition sensor operates in a swipe sensing mode according to various embodiments of the present disclosure;
FIG. 12 is a diagram illustrating a configuration of a sensing array of a fingerprint recognition sensor according to various embodiments of the present disclosure;
FIG. 13 is a diagram illustrating an example of setting a fingerprint sensing array of a fingerprint recognition sensor according to various embodiments of the present disclosure;
FIG. 14 is a diagram illustrating a guide to a touch sensing mode or a swipe sensing mode according to various embodiments of the present disclosure;
FIG. 15 is a flow diagram illustrating a method for controlling an electronic device having a plurality of fingerprint sensing modes according to various embodiments of the present disclosure;
FIG. 16 is a flow diagram illustrating a method for controlling an electronic device having a plurality of fingerprint sensing modes according to various embodiments of the present disclosure;
FIG. 17 is a diagram illustrating a method for controlling an electronic device having a graphical object requiring security authentication according to various embodiments of the present disclosure;
FIG. 18 is a diagram illustrating a method for controlling an electronic device according to various embodiments of the present disclosure;
FIG. 19 is a diagram illustrating a method for controlling an electronic device according to various embodiments of the present disclosure;
FIG. 20 is a diagram a method for controlling an electronic device according to various embodiments of the present disclosure;
FIGS. 21A to 21D are diagrams of a method for controlling an electronic device according to various embodiments of the present disclosure;
FIG. 22 is a flow diagram illustrating a method for controlling an electronic device in case of executing an application according to various embodiments of the present disclosure;
FIG. 23 is a flow diagram of a method of controlling an electronic device based on a security authentication request level according to various embodiments of the present disclosure; and
FIG. 24 is a flow diagram illustrating a method for performing fingerprint authentication through a plurality of fingerprint sensing modes in an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may modify various elements regardless of an order and/or importance of the corresponding elements, and do not limit the corresponding elements. These terms may be used for the purpose of distinguishing one element from another element. For example, a first user device and a second user device may indicate different user devices regardless of the order or importance. For example, a first element may be referred to as a second element without departing from the scope the present disclosure, and similarly, a second element may be referred to as a first element.

It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The expression "configured to (or set to)" as used herein may be used interchangeably with "suitable for," "having the capacity to," "designed to," " adapted to," "made to," or "capable of' according to a context. The term "configured to (set to)" does not necessarily mean "specifically designed to" in a hardware level. Instead, the expression "apparatus configured to..." may mean that the apparatus is "capable of..." along with other devices or parts in a certain context. For example, "a processor configured to (set to) perform A, B, and C" may mean a dedicated processor (e.g., an embedded processor) for performing a corresponding operation, or a generic-purpose processor (e.g., a central processing unit (CPU) or an application processor (AP)) capable of performing a corresponding operation by executing one or more software programs stored in a memory device.

The terms used in describing various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

Electronic devices according to embodiments of the present disclosure may include at least one of, for example, smart phones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) audio layer 3 (MP3) players, mobile medical devices, cameras, or wearable devices. According to an embodiment of the present disclosure, the wearable devices may include at least one of accessory-type wearable devices (e.g., watches, rings, bracelets, anklets, necklaces, glasses, contact lenses, or head-mounted-devices (HMDs)), fabric or clothing integral wearable devices (e.g., electronic clothes), body-mounted wearable devices (e.g., skin pads or tattoos), or implantable wearable devices (e.g., implantable circuits).

The electronic devices may be smart home appliances. The smart home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ and PlayStation™), electronic dictionaries, electronic keys, camcorders, or electronic picture frames.

The electronic devices may include at least one of various medical devices (e.g., various portable medical measurement devices (such as blood glucose meters, heart rate monitors, blood pressure monitors, or thermometers, and the like), a magnetic resonance angiography (MRA) device, a magnetic resonance imaging (MRI) device, a computed tomography (CT) device, scanners, or ultrasonic devices, and the like), navigation devices, global positioning system (GPS) receivers, event data recorders (EDRs), flight data recorders (FDRs), vehicle infotainment devices, electronic equipment for vessels (e.g., navigation systems, gyrocompasses, and the like), avionics, security devices, head units for vehicles, industrial or home robots, automatic teller machines (ATMs), points of sales (POSs) devices, or Internet of Things (IoT) devices (e.g., light bulbs, various sensors, electric or gas meters, sprinkler devices, fire alarms, thermostats, street lamps, toasters, exercise equipment, hot water tanks, heaters, boilers, and the like).

The electronic devices may be further included in furniture or buildings/structures, electronic boards, electronic signature receiving devices, projectors, or various measuring instruments (such as water meters, electricity meters, gas meters, or wave meters, and the like). The electronic devices may be one or more combinations of the above-mentioned devices. The electronic devices may be flexible electronic devices. Also, the electronic devices are not limited to the above-mentioned devices, and may include new electronic devices according to the development of new technologies.

Hereinafter, electronic devices according to various embodiments of the present disclosure will be described with reference to the accompanying drawings. The term "user" as used herein may refer to a person who uses an electronic device or may refer to a device (e.g., an artificial intelligence electronic device) which uses an electronic device.

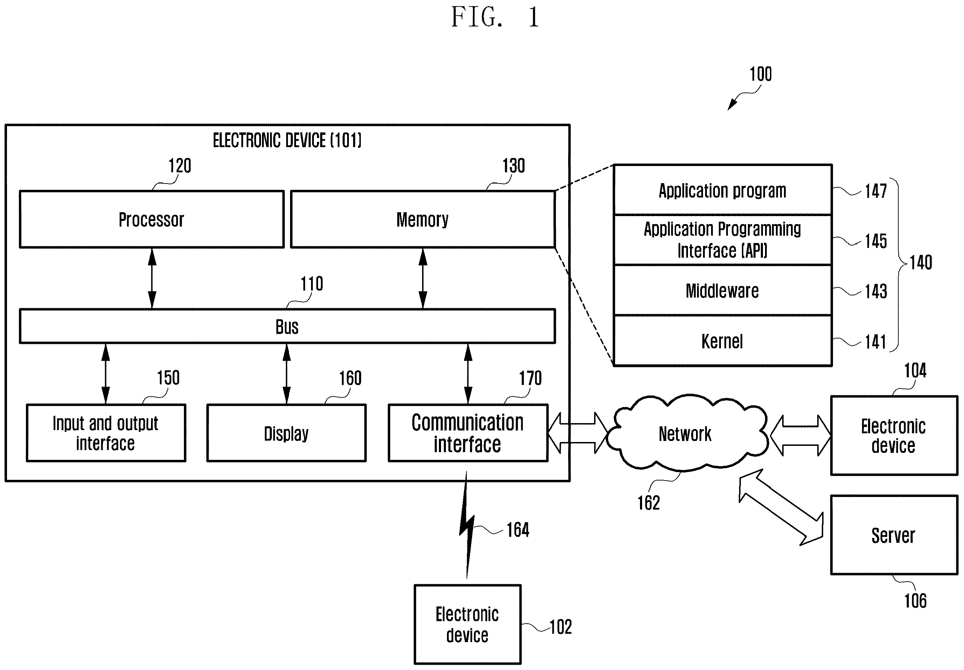

FIG. 1 illustrates a network environment including an electronic device according to an embodiment of the present disclosure.

Referring to FIG. 1, a network environment 100 includes an electronic device 101 having a bus 110, a processor 120, a memory 130, an input/output interface 150, a display 160, and a communication interface 170. At least one of the above described components may be omitted from the electronic device 101 or another component may be further included in the electronic device 101.

The bus 110 may be a circuit connecting the above described components 120, 130, and 150-170 and transmitting communications (e.g., control messages and/or data) between the above described components.

The processor 120 may include one or more of a CPU, an AP, and a communication processor (CP). The processor 120 is capable of controlling at least one of other components of the electronic device 101 and/or processing data or operations related to communication.

The memory 130 may include volatile memory and/or non-volatile memory. The memory 130 is capable of storing data or commands related to at least one of other components of the electronic device 101. The memory 130 is capable of storing software and/or a program module 140. For example, the program module 140 may include a kernel 141, middleware 143, an application programming interface (API) 145, application programs (or applications) 147, etc. The kernel 141, the middleware 143 or at least part of the API 145 may be referred to as an operating system (OS).

The kernel 141 is capable of controlling or managing system resources (e.g., the bus 110, the processor 120, the memory 130, etc.) used to execute operations or functions of other programs (e.g., the middleware 143, the API 145, and the application programs 147). The kernel 141 provides an interface capable of allowing the middleware 143, the API 145, and the application programs 147 to access and control/manage the individual components of the electronic device 101.

The middleware 143 may be an interface between the API 145 or the application programs 147 and the kernel 141 so that the API 145 or the application programs 147 can communicate with the kernel 141 and exchange data therewith. The middleware 143 is capable of processing one or more task requests received from the application programs 147 according to the priority. For example, the middleware 143 is capable of assigning a priority for use of system resources of the electronic device 101 (e.g., the bus 110, the processor 120, the memory 130, etc.) to at least one of the application programs 147. For example, the middleware 143 processes one or more task requests according to a priority assigned to at least one application program, thereby performing scheduling or load balancing for the task requests.

The API 145 may be an interface that is configured to allow the application programs 147 to control functions provided by the kernel 141 or the middleware 143. The API 145 may include at least one interface or function (e.g., instructions) for file control, window control, image process, text control, or the like.

The input/output interface 150 is capable of transferring instructions or data, received from the user or external devices, to one or more components of the electronic device 101. The input/output interface 150 is capable of outputting instructions or data, received from one or more components of the electronic device 101, to the user or external devices.

The display 160 may include a liquid crystal display (LCD), a flexible display, a transparent display, a light emitting diode (LED) display, an organic LED (OLED) display, micro-electro-mechanical systems (MEMS) display, an electronic paper display, etc. The display 160 is capable of displaying various types of content (e.g., texts, images, videos, icons, symbols, etc.). The display 160 may also be implemented with a touch screen. In this case, the display 160 is capable of receiving touches, gestures, proximity inputs or hovering inputs, via a stylus pen or a user's body.

The communication interface 170 is capable of establishing communication between the electronic device 101 and an external device For example, the communication interface 170 is capable of communicating with an external device connected to a network 162 via wired or wireless communication.

Wireless communication may employ a cellular communication protocol such as long-term evolution (LTE), LTE Advance (LTE-A), code division multiple access (CDMA), wideband CDMA (WCDMA), universal mobile telecommunications system (UMTS), wireless broadband (WiBro), and global system for mobile communication (GSM). Wireless communication may also include a short-range wireless communication link 164. The short-wireless communication link 164 may include at least one of wireless fidelity (Wi-Fi), Bluetooth (BT), near field communication (NFC), magnetic secure transmission (MST), and global navigation satellite system (GNSS). The GNSS may include at least one of GPS, global navigation satellite system (Glonass), Beidou GNSS (Beidou), Galileo, the European global satellite-based navigation system, according to GNSS using areas, bandwidths, etc. In the present disclosure, the terms "GPS" and "GNSS" may be used interchangeably. Wired communication may include at least one of universal serial bus (USB), high definition multimedia interface (HDMI), recommended standard 232 (RS-232), and plain old telephone service (POTS). The network 162 may include at least one of a telecommunications network, e.g., a computer network (e.g., local area network (LAN) or wide area network (WAN)), the Internet, and a telephone network.

A first external electronic device 102 and a second external electronic device 104 are each identical to or different from the electronic device 101. According to an embodiment, a server 106 is capable of including a group of one or more servers. According to various embodiments, part or all of the operations executed on the electronic device 101 may be executed on another electronic device or a plurality of other electronic devices (e.g., electronic devices 102 and 104 or a server 106). According to an embodiment, when the electronic device needs to perform a function or service automatically or according to a request, it does not perform the function or service, but is capable of additionally requesting at least part of the function related to the function or service from another electronic device (e.g., electronic devices 102 and 104 or a server 106). The other electronic device (e.g., electronic devices 102 and 104 or a server 106) is capable of executing the requested function or additional functions, and transmitting the result to the electronic device 101. The electronic device 101 processes the received result, or further proceeds with additional processes, to provide the requested function or service. To this end, the electronic device 101 may employ cloud computing, distributed computing, or client-server computing technology.

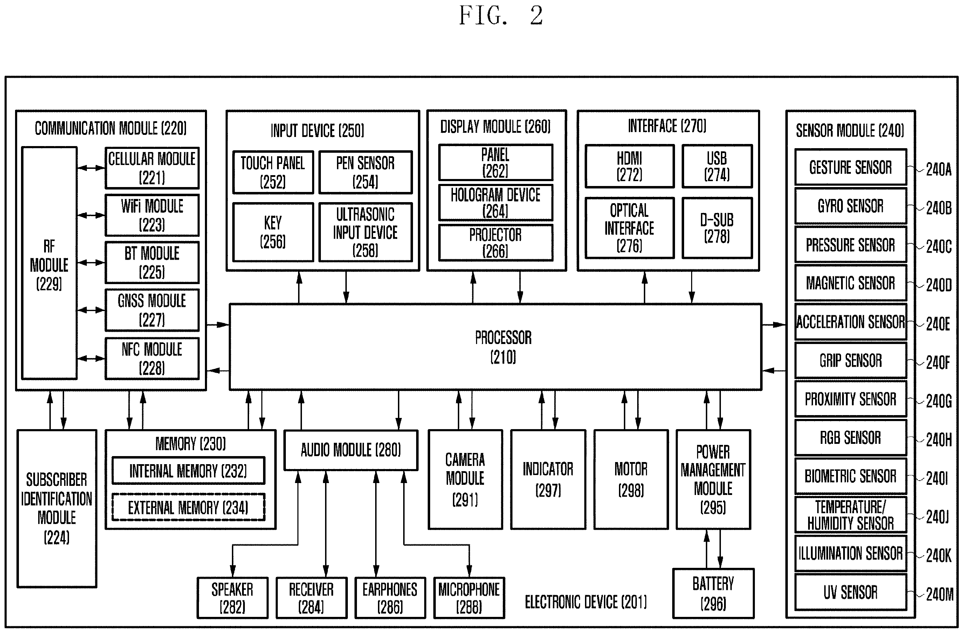

FIG. 2 is a block diagram showing a configuration of an electronic device according to an embodiment of the present disclosure.

Referring to FIG. 2, an electronic device 201 may include a part or all of the components in the electronic device 101 shown in FIG. 1. The electronic device 201 may include one or more processors 210 (e.g., APs), a communication module 220, a subscriber identification module (SIM) 224, a memory 230, a sensor module 240, an input device 250, a display module 260, an interface 270, an audio module 280, a camera module 291, a power management module 295, a battery 296, an indicator 297, and a motor 298.

The processor 210 is capable of driving, for example, an OS or an application program to control a plurality of hardware or software components connected to the processor 210, processing various data, and performing operations. The processor 210 may be implemented as, for example, a system on chip (SoC). The processor 210 may further include a graphic processing unit (GPU) and/or an image signal processor. The processor 210 may also include at least part of the components shown in FIG. 2, e.g., a cellular module 221. The processor 210 is capable of loading commands or data received from at least one of other components (e.g., a non-volatile memory) on a volatile memory, processing the loaded commands or data. The processor 210 is capable of storing various data in a non-volatile memory.

The communication module 220 may include the same or similar configurations as the communication interface 170 shown in FIG. 1. For example, the communication interface 170 is capable of including the cellular module 221, a Wi-Fi module 223, a BT module 225, a GNSS module 227 (e.g., a GPS module, Glonass module, Beidou module or Galileo module), an NFC module 228, and a radio frequency (RF) module 229.

The cellular module 221 is capable of providing a voice call, a video call, a short message service (SMS) service, an Internet service, etc., through a communication network, for example. The cellular module 221 is capable of identifying and authenticating an electronic device 201 in a communication network by using the SIM 224. The cellular module 221 is capable of performing at least a part of the functions provided by the processor 210. The cellular module 221 may include a CP.

Each of the Wi-Fi module 223, the BT module 225, the GNSS module 227, and the NFC module 228 may include a processor for processing data transmitted or received through the corresponding module. At least part of the cellular module 221, Wi-Fi module 223, BT module 225, GNSS module 227, and NFC module 228 (e.g., two or more modules) may be included in one integrated chip (IC) or one IC package.

The RF module 229 is capable of transmission/reception of communication signals, e.g., RF signals. The RF module 229 is capable of including a transceiver, a power amplifier module (PAM), a frequency filter, a low noise amplifier (LNA), an antenna, etc. At least one of the cellular module 221, the Wi-Fi module 223, the BT module 225, the GNSS module 227, and the NFC module 228 is capable of transmission/reception of RF signals through a separate RF module.

The memory 230 may include a built-in memory 232 or an external memory 234. The built-in memory 232 is capable of including at least one of a volatile memory, e.g., a random access memory (RAM) dynamic RAM (DRAM), a static RAM (SRAM), a synchronous dynamic RAM (SDRAM), etc. and a non-volatile memory, e.g., a read only memory (ROM), one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, an NOR flash memory, etc.), a hard drive, a solid state drive (SSD), etc.

The external memory 234 may include a flash drive, e.g., a compact flash (CF), a secure digital (SD), a micro-SD, a mini-SD, an extreme digital (xD), a multi-media card (MMC), a memory stick, etc. The external memory 234 may be connected to the electronic device 201, functionally and/or physically, through various interfaces.

The sensor module 240 is capable of measuring/detecting a physical quantity or an operation state of the electronic device 201, and converting the measured or detected information into an electronic signal. The sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green and blue (RGB) sensor), a biometric sensor 240I, a temperature/humidity sensor 240J, an illuminance sensor 240K, and an ultraviolet (UV) sensor 240M. Additionally or alternatively, the sensor module 240 may also include an e-nose sensor, an electromyography (EMG) sensor, an electroencephalogram (EEG) sensor, an electrocardiogram (ECG) sensor, an infrared (IR) sensor, an iris sensor and/or a fingerprint recognition sensor. The sensor module 240 may further include a control circuit for controlling one or more sensors included therein. The electronic device 201 may include a processor, configured as part of the processor 210 or a separate component, for controlling the sensor module 240. In this case, while the processor 210 is operating in sleep mode, the processor is capable of controlling the sensor module 240.

The input device 250 may include a touch panel 252, a (digital) pen sensor 254, a key 256, or an ultrasonic input device 258. The touch panel 252 may be implemented with at least one of a capacitive touch system, a resistive touch system, an IR touch system, and an ultrasonic touch system. The touch panel 252 may further include a control circuit, and the touch panel 252 may include a tactile layer to provide a tactile response to the user. The (digital) pen sensor 254 may be implemented with a part of the touch panel or with a separate recognition sheet. The key 256 may include a physical button, an optical key, or a keypad. The ultrasonic input device 258 is capable of detecting ultrasonic waves, created in an input tool, through a microphone 288, and identifying data corresponding to the detected ultrasonic waves.

The display module 260 may include a panel 262, a hologram unit 264, or a projector 266. The panel 262 may include the same or similar components as the display 160 shown in FIG. 1. The panel 262 may be implemented to be flexible, transparent, or wearable. The panel 262 may also be incorporated into one module together with the touch panel 252. The hologram unit 264 is capable of showing a stereoscopic image in the air by using light interference. The projector 266 is capable of displaying an image by projecting light onto a screen. The screen may be located inside or outside of the electronic device 201. The display module 260 may further include a control circuit for controlling the panel 262, the hologram unit 264, or the projector 266.

The interface 270 may include an HDMI 272, a USB 274, an optical interface 276, or a d-subminiature (D-sub) 278.

The interface 270 may be included in the communication interface 170 shown in FIG. 1. Additionally or alternatively, the interface 270 may include a mobile high-definition link (MHL) interface, an SD card/MMC interface, or an infrared data association (IrDA) standard interface.

The audio module 280 is capable of providing bidirectional conversion between a sound and an electronic signal. At least part of the components in the audio module 280 may be included in the input/output interface 150 shown in FIG. 1. The audio module 280 is capable of processing sound information input or output through a speaker 282, a receiver 284, earphones 286, a microphone 288, etc.

The camera module 291 is a device capable of taking both still and moving images. The camera module 291 may include one or more image sensors (e.g., a front image sensor or a rear image sensor), a lens, an image signal processor (ISP), a flash (e.g., an LED or xenon lamp), etc.

The power management module 295 is capable of managing power of the electronic device 201. The power management module 295 may include a power management integrated circuit (PMIC), a charger IC, or a battery gauge. The PMIC may employ wired charging and/or wireless charging methods. Examples of the wireless charging method are magnetic resonance charging, magnetic induction charging, and electromagnetic charging. To this end, the PMIC may further include an additional circuit for wireless charging, such as a coil loop, a resonance circuit, a rectifier, etc. The battery gauge is capable of measuring the residual capacity, charge in voltage, current, or temperature of the battery 296.

The battery 296 may be implemented by, for example, a rechargeable battery or a solar battery.

The indicator 297 is capable of displaying a specific status of the electronic device 201 or a part thereof (e.g., the processor 210), e.g., a boot-up status, a message status, a charging status, etc. The motor 298 is capable of converting an electrical signal into mechanical vibrations, such as, a vibration effect, a haptic effect, etc. The electronic device 201 may also include a processing unit (e.g., GPU) for supporting a mobile TV. The processing unit for supporting a mobile TV is capable of processing media data pursuant to standards, e.g., digital multimedia broadcasting (DMB), digital video broadcasting (DVB), or mediaFlo™, etc.

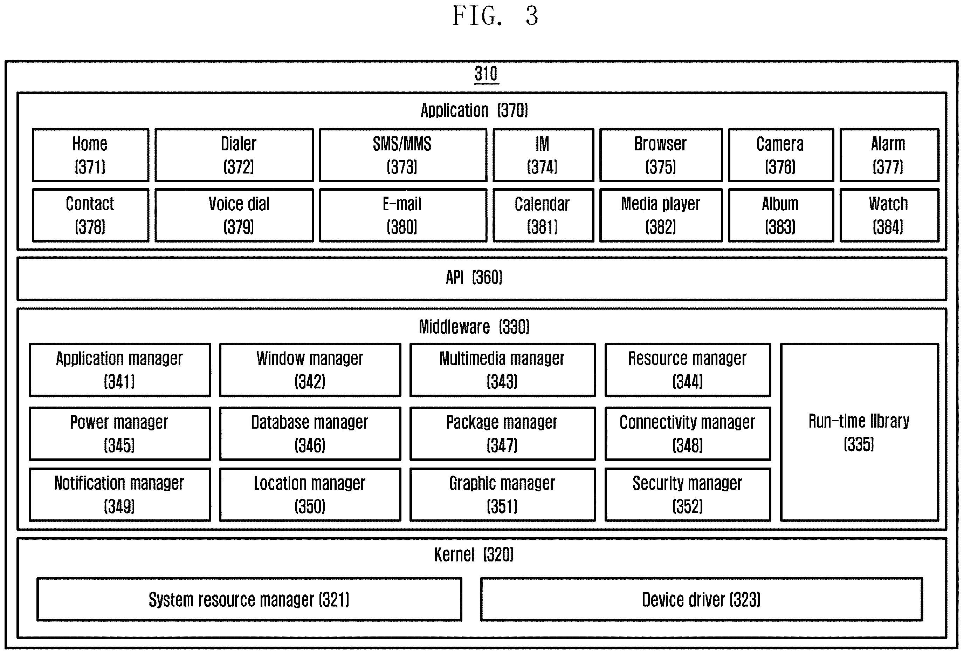

FIG. 3 is a block diagram of a programming module according to an embodiment of the present disclosure.

Referring to FIG. 3, a program module 310 (e.g., the program module 140 shown in FIG. 1) is capable of including an OS for controlling resources related to the electronic device (e.g., electronic device 101) and/or various applications (e.g., application programs 147 shown in FIG. 1) running on the OS. The OS may be Android, iOS, Windows, Symbian, Tizen, Bada, etc.

The program module 310 is capable of including a kernel 320, middleware 330, an API 360 and/or applications 370. At least part of the program module 310 may be preloaded on the electronic device or downloaded from a server (e.g., an electronic device 102 or 104, server 106, etc.).

The kernel 320 (for example, kernel 141) may include a system resource manager 321 and/or a device driver 323. The system resource manager 321 may include, for example, a process manager, a memory manager, and a file system manager. The system resource manager 321 may perform a system resource control, allocation, and recall. The device driver 323 may include, for example, a display driver, a camera driver, a BT driver, a shared memory driver, a USB driver, a keypad driver, a Wi-Fi driver, and an audio driver. Further, according to an embodiment, the device driver 323 may include an inter-process communication (IPC) driver.

The middleware 330 may provide a function required in common by the applications 370. Further, the middleware 330 may provide a function through the API 360 to allow the applications 370 to efficiently use limited system resources within the electronic device. According to an embodiment, the middleware 330 (for example, the middleware 143) may include at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352. Furthermore, although not shown, the middleware 330 may also include a payment manager.

The runtime library 335 may include, for example, a library module used by a complier to add a new function through a programming language while the applications 370 are executed. According to an embodiment, the runtime library 335 executes input and output, management of a memory, a function associated with an arithmetic function and the like.

The application manager 341 may manage, for example, a life cycle of at least one of the applications 370. The window manager 342 may manage graphical user interface (UI) resources used on the screen. The multimedia manager 343 may detect a format required for reproducing various media files and perform an encoding or a decoding of a media file by using a codec suitable for the corresponding format. The resource manager 344 manages resources such as a source code, a memory, or a storage space of at least one of the applications 370.

The power manager 345 may operate together with a basic input/output system (BIOS) to manage a battery or power and provides power information required for the operation. The database manager 346 may manage generation, search, and change of a database to be used by at least one of the applications 370. The package manager 347 may manage an installation or an update of an application distributed in a form of a package file.

The connection manager 348 may manage, for example, a wireless connection such as Wi-Fi or BT. The notification manager 349 may display or notify a user of an event such as an arrival message, an appointment, a proximity alarm or the like, in a manner that does not disturb the user. The location manager 350 may manage location information of the electronic device. The graphic manager 351 may manage a graphic effect provided to the user or a UI related to the graphic effect. The security manager 352 provides a general security function required for a system security or a user authentication. According to an embodiment, when the electronic device (for example, the electronic device 101) has a call function, the middleware 330 may further include a telephony manager for managing a voice of the electronic device or a video call function.

The middleware 330 is capable of including modules configuring various combinations of functions of the above described components. The middleware 330 is capable of providing modules specialized according to types of operation systems to provide distinct functions. The middleware 330 may be adaptively configured in such a way as to remove part of the existing components or to include new components.

The API 360 (for example, API 145) may be a set of API programming functions, and may be provided with a different configuration according to an OS. For example, in Android or iOS, a single API set may be provided for each platform. In Tizen, two or more API sets may be provided.

The applications 370 (e.g., application programs 147) may include one or more applications for performing various functions, e.g., home 371, dialer 372, SMS/multi-media message service (MMS) 373, instant message (IM) 374, browser 375, camera 376, alarm 377, contact 378, voice dial 379, email 380, calendar 381, media player 382, album 383, and watch 384 (e.g., clock features). Furthermore, although not shown, the applications 370 may also include health care (e.g., an application for measuring amount of exercise, blood sugar level, etc.), and environment information (e.g., an application for providing atmospheric pressure, humidity, temperature, etc.).

According to an embodiment, the applications 370 are capable of including an application for supporting information exchange between an electronic device (e.g., electronic device 101) and an external device (e.g., electronic devices 102 and 104), which is hereafter called 'information exchange application'). The information exchange application is capable of including a notification relay application for relaying specific information to external devices or a device management application for managing external devices.

According to an embodiment, the applications 370 are capable of including an application (e.g., a health care application of a mobile medical device, etc.) having specified attributes of an external device (e.g., electronic devices 102 and 104). According to an embodiment, the applications 370 are capable of including applications received from an external device (e.g., a server 106, electronic devices 102 and 104). According to an embodiment, the applications 370 are capable of including a preloaded application or third party applications that can be downloaded from a server. It should be understood that the components of the program module 310 may be called different names according to types of OSs.

According to various embodiments of the present disclosure, a method for controlling an electronic device having a touch screen, a fingerprint recognition sensor disposed at least partially at a region of the touch screen, and a processor electrically coupled to the touch screen and the fingerprint recognition sensor may include operations of identifying contextual information associated with a fingerprint input of the fingerprint recognition sensor, determining the fingerprint recognition sensor to operate in a first sensing mode if the contextual information satisfies a first condition determining the fingerprint recognition sensor to operate in a second sensing mode if the contextual information satisfies a second condition, and obtaining fingerprint information from the fingerprint input through the fingerprint recognition sensor.

In the method, the operation of obtaining the fingerprint information includes obtaining the fingerprint information by scanning at one time a fingerprint image corresponding to the fingerprint input through the fingerprint recognition sensor in case of the first sensing mode, and obtaining the fingerprint information by continuously scanning a fingerprint image corresponding to the fingerprint input through the fingerprint recognition sensor in case of the second sensing mode.

In the method, the operation of identifying the contextual information may include determining the fingerprint recognition sensor to operate in the first sensing mode if the fingerprint input corresponds to a touch input in connection with the fingerprint recognition sensor, and determining the fingerprint recognition sensor to operate in the second sensing mode if the fingerprint input corresponds to a swipe input in connection with the fingerprint recognition sensor.

In the method, the fingerprint recognition sensor may include a first region having a first attribute and a second region having a second attribute, the operation of determining the fingerprint recognition sensor to operate in the first sensing mode may include activating the first and second regions in the first sensing mode, and the operation of determining the fingerprint recognition sensor to operate in the second sensing mode may include activating the second region in the second sensing mode.

The method may further include operations of, at the processor, comparing the obtained fingerprint information with fingerprint information stored in a memory of the electronic device and performing a particular function when a comparison result satisfies a predetermined condition.

The method may further include an operation of, at the processor, displaying a guide UI in or near the region of the touch screen to require the fingerprint input when the comparison result fails to satisfy the predetermined condition.

In the method, the operation of identifying the contextual information may include determining the fingerprint recognition sensor to operate in the first sensing mode if an attribute of an application requesting fingerprint authentication corresponds to a first attribute, and determining the fingerprint recognition sensor to operate in the second sensing mode if the attribute of the application corresponds to a second attribute.

In the method, the attribute of the application may include a type of the fingerprint recognition sensor supportable by the application or a security level required by the application.

The method may further include operations of comparing the obtained fingerprint information with fingerprint information stored in a memory of the electronic device, performing a particular function when a comparison result satisfies a predetermined condition, and determining the fingerprint recognition sensor to operate in the second sensing mode when the comparison result fails to satisfy the predetermined condition.

The term "module" according to the embodiments of the disclosure, means, but is not limited to, a unit of one of software, hardware, and firmware or any combination thereof. The term "module" may be used interchangeably with the terms "unit," "logic," "logical block," "component," or "circuit." The term "module" may denote a smallest unit of component or a part thereof. The term "module" may be the smallest unit of performing at least one function or a part thereof. A module may be implemented mechanically or electronically. For example, a module may include at least one of application-specific integrated circuit (ASIC) chip, field-programmable gate arrays (FPGAs), and Programmable-Logic Device known or to be developed for certain operations.

According to various embodiments of the present disclosure, the devices (e.g. modules or their functions) or methods may be implemented by computer program instructions stored in a computer-readable storage medium. In the case that the instructions are executed by at least one processor (e.g., the processor 120), the at least one processor may execute the functions corresponding to the instructions. The computer-readable storage medium may be the memory 130. At least a part of the programing module may be implemented (e.g. executed) by the processor 120. At least a part of the programing module may include modules, programs, routines, sets of instructions, and processes for executing the at least one function.

According to various embodiments of the present disclosure, a non-transitory computer-readable recording medium having, recorded thereon, a program may include instructions of identifying contextual information associated with a fingerprint input of a fingerprint recognition sensor, determining the fingerprint recognition sensor to operate in a first sensing mode if the contextual information satisfies a first condition, determining the fingerprint recognition sensor to operate in a second sensing mode if the contextual information satisfies a second condition, and obtaining fingerprint information from the fingerprint input through the fingerprint recognition sensor.

The computer-readable storage medium includes magnetic media such as a floppy disk and a magnetic tape, optical media including a compact disc (CD) ROM and a DVD ROM, a magneto-optical media such as a floptical disk, and the hardware device designed for storing and executing program commands such as ROM, RAM, and flash memory. The program commands include the language code executable by computers using the interpreter as well as the machine language codes created by a compiler. The aforementioned hardware device can be implemented with one or more software modules for executing the operations of the various embodiments of the present disclosure.

The module or programming module of the present disclosure may include at least one of the aforementioned components with omission of some components or addition of other components. The operations of the modules, programming modules, or other components may be executed in series, in parallel, recursively, or heuristically. Also, some operations may be executed in different order, omitted, or extended with other operations.

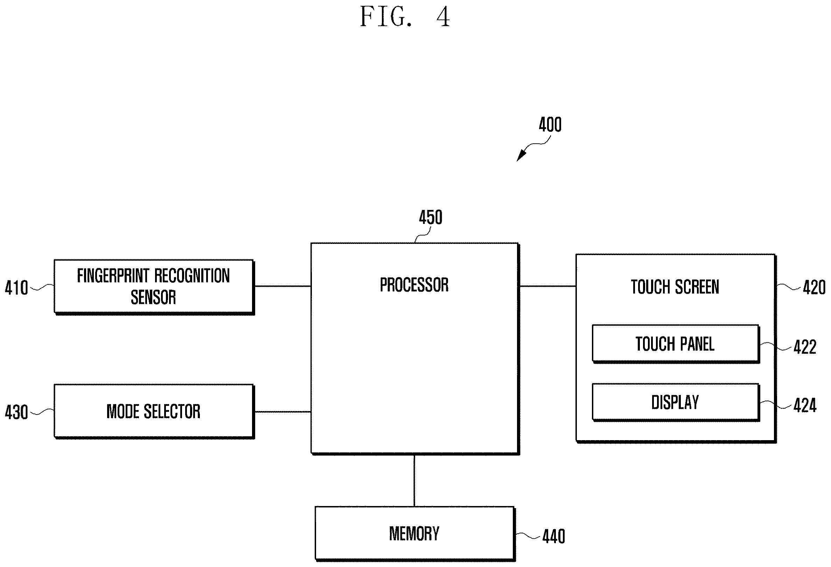

FIG. 4 is a block diagram illustrating an electronic device according to various embodiments of the present disclosure.

Referring to FIG. 4, in various embodiments, the electronic device 400 may include a fingerprint recognition sensor 410, a touch screen 420, a mode selector 430, a memory 440, and a processor 450.

According to various embodiments, the fingerprint recognition sensor 410 may obtain information about a user's fingerprint by using at least one of optical, capacitive, and ultrasonic techniques. The optical type sensor may obtain a user's fingerprint by capturing an image of the fingerprint through a photosensitive diode. The capacitive type sensor may obtain a fingerprint by detecting only the crest of the fingerprint (i.e., a portion of the fingerprint touched to an electrode) except the trough of the fingerprint (i.e., a non-touched portion). The ultrasonic type sensor may obtain a fingerprint by generating ultrasonic waves through a piezoelectric device and then using a path difference of the ultrasonic waves reflected on the crest and trough of the fingerprint.

According to one embodiment, the fingerprint recognition sensor 410 may provide at least one fingerprint sensing mode. For example, the fingerprint recognition sensor 410 may create fingerprint information corresponding to a user's fingerprint, based on the amount of currents which vary when a user's finger touches or swipes at least part of a fingerprint sensing region. The fingerprint sensing region of the fingerprint recognition sensor 410 may be included in a home button of the electronic device 400 or in a partial or entire region of the touch screen 420.

According to one embodiment, the fingerprint recognition sensor 410 may include a fingerprint sensing array divided into a plurality of regions.

According to various embodiments, the touch screen 420 may perform both an input function and a display function. For these functions, the touch screen 420 may include a touch panel 422 and a display 424. The touch panel 422 may be formed of a touch sensing sensor using a capacitive overlay, a resistive overlay or an IR beam, or may be formed of a pressure sensor. Alternatively, any kind of sensing device capable of sensing contact or pressure of an object may be used for the touch panel 422. The touch panel 422 may sense a user's touch input, create a sensing signal, and transmit the signal to the processor 450. The sensing signal may include coordinate data of the user's touch. If the user's touch moves, the touch panel 422 may create a sensing signal including coordinate data of a touch position moving path and then transmit the signal to the processor 450. The display 424 may be formed of an LCD, an OLED, an active matrix OLED (AMOLED), or the like. The display 424 may visually offer a menu of the electronic device 400, input data, function setting information, and any other information to the user.

According to one embodiment, the touch screen 420 may include the fingerprint sensing region of the fingerprint recognition sensor 410 in at least partial region or the entire region of the touch panel 422 or the display 424. For example, the fingerprint sensing region of the fingerprint recognition sensor 410 may be disposed through printing or etching on a surface of a cover glass provided over the display 424 to protect the display 424. In another example, the fingerprint sensing region of the fingerprint recognition sensor 410 may be disposed on or under the touch panel 422. In still another example, the fingerprint sensing region of the fingerprint recognition sensor 410 may be disposed inside pixels of the touch panel 422 or in a black masking region between the pixels. The touch screen 420 may display different-shaped guides to respective sensing modes (e.g., a touch mode and a swipe mode) of the fingerprint recognition sensor 410 to the user.

According to one embodiment, the mode selector 430 may enable the fingerprint recognition sensor 410 to operate in a touch mode or a swipe mode under the control of the processor 450.

According to various embodiments, the memory 440 stores a program for controlling the operation of the electronic device 400, a program for processing or controlling of the processor 450, an OS, various applications, and input/output data. The memory 440 may store a UI provided in the electronic device 400 and various kinds of setting information necessary for processing a function in the electronic device 400.

According to one embodiment, the memory 440 may store various programs and data associated with a fingerprint recognition function, based on the fingerprint recognition sensor 410. For example, the memory 440 may store a program for processing a function according to a line scan or area scan scheme of the fingerprint recognition sensor 410 and also store data processed through this program. In addition, the memory 440 may store a user's fingerprint recognized through the touch mode or the swipe mode. The fingerprint stored in the memory 440 may be used to check whether a fingerprint recognized later by the fingerprint recognition sensor 410 is identical or not.

According to various embodiments, the processor 450 may perform functions of controlling the overall operation of the electronic device 400, controlling a signal flow between internal components, and processing data. The processor 450 may include, for example, a CPU, an AP, a CP, and the like. The processor 450 may be formed of a single core processor, a multi-core processor, or a plurality of processors.

According to one embodiment, the processor 450 may control the functions and operations of the fingerprint recognition sensor 410, the touch screen 420, the mode selector 430 and the memory 440 in the electronic device 400. The processor 450 may control the fingerprint sensing region of the single fingerprint recognition sensor 410 to provide both the touch mode and the swipe mode. The processor 450 may control the fingerprint recognition sensor 410 to simultaneously perform functions such as user authentication, security inactivation and application execution of the electronic device 400 through a single operation for fingerprint recognition.

According to one embodiment, the processor 450 may control the fingerprint recognition sensor 410 to operate in the first sensing mode (e.g., the touch mode) when contextual information satisfies the first condition, and may also control the fingerprint recognition sensor 410 to operate in the second sensing mode (e.g., the swipe mode) when the contextual information satisfies the second condition.

According to one embodiment, the processor 450 may receive a user's touch input entered to the fingerprint recognition sensor 410 through the touch screen 420 and determine the type of the touch input. Then the processor 450 may control the fingerprint recognition sensor 410 to operate in the first sensing mode (e.g., the touch mode) in case of the first input type (e.g., a touch input event) and also control the fingerprint recognition sensor 410 to operate in the second sensing mode (e.g., the swipe mode) in case of the second input type (e.g., a drag input event or a swipe input event).

According to one embodiment, the processor 450 may detect, as contextual information, a user's input entered into the fingerprint recognition sensor 410 through the touch screen 420, identify the type of the input, and determine operating in the first or second sensing mode depending on the identified input type.

According to one embodiment, the processor 450 may determine the input type as a touch input or a drag input of the fingerprint recognition sensor 410.

According to one embodiment, the processor 450 may identify the type of application as contextual information, and determine operation in the first or second sensing mode depending on the identified application type.

According to one embodiment, the fingerprint recognition sensor 410 may include a fingerprint sensing array divided into a plurality of regions, and the processor 450 may activate at least part of the fingerprint sensing array of the fingerprint recognition sensor 410 depending on the sensing type of the fingerprint recognition sensor 410.

According to one embodiment, the fingerprint sensing array divided into the plurality of regions of the fingerprint recognition sensor 410 may have different sensing characteristics.

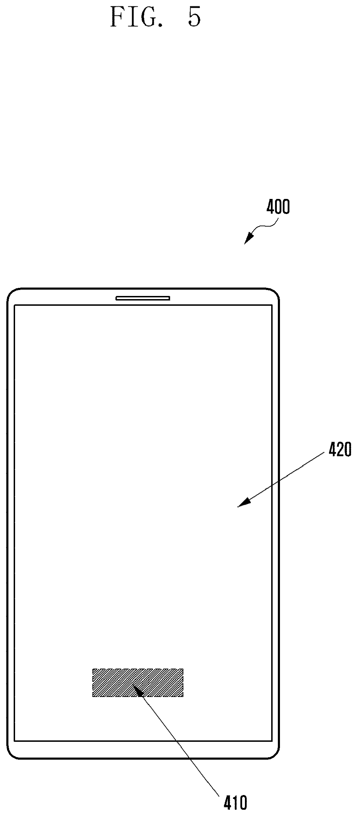

FIG. 5 is a diagram illustrating the configuration of a fingerprint recognition sensor disposed at a partial region of a touch screen in an electronic device according to various embodiments of the present disclosure.

Referring to FIG. 5, the front surface of the electronic device 400 may be mostly formed of the touch screen 420. The fingerprint sensing region of the fingerprint recognition sensor 410 may be disposed at a partial region of the touch screen 420, in the entire region of the touch screen 420, or near the touch screen 420 (e.g., at a home button). The fingerprint recognition sensor 410 may recognize a fingerprint of a user of the electronic device 400 through a touch mode or a swipe mode.

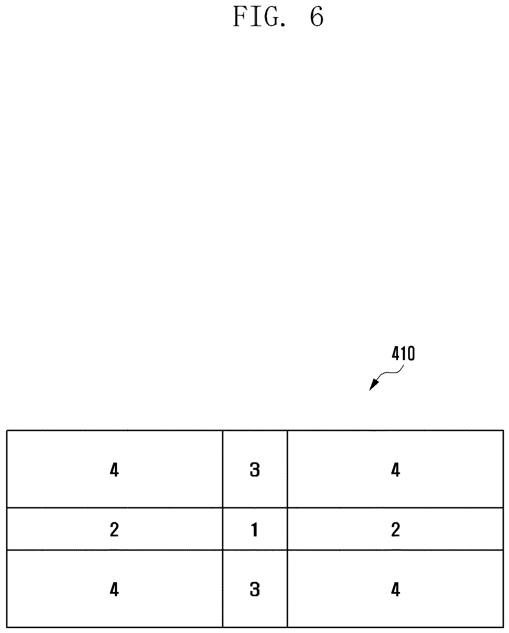

FIG. 6 is a diagram illustrating a configuration of a sensing array of a fingerprint recognition sensor according to various embodiments of the present disclosure.

Referring to FIG. 6, the fingerprint recognition sensor 410 may include a fingerprint sensing array divided into a plurality of sensing regions. For example, the fingerprint sensing array of the fingerprint recognition sensor 410 may include a first array 1 disposed centrally, a second array 2 disposed leftward and rightward from the first array 1, a third array 3 disposed upward and downward from the first array 1, and a fourth array 4 disposed at four corners around the first array 1. The respective sensing arrays (e.g., the first to fourth arrays 1 to 4) may have different sensing characteristics.

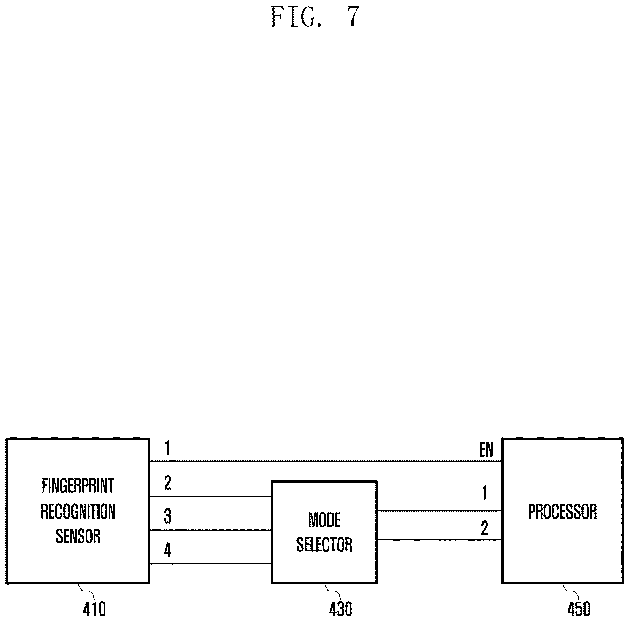

FIG. 7 is a diagram illustrating a connection relationship among a fingerprint recognition sensor, a mode selector, and a processor according to various embodiments of the present disclosure.

Referring to FIG. 7, the mode selector 430 according to various embodiments may be connected to the fingerprint recognition sensor 410 at one end and to the processor 450 at the other end. The mode selector 430 may control the fingerprint recognition sensor 410 to operate in a touch mode or a swipe mode under the control of the processor 450.

The mode selector 430 according to various embodiments may be included in the processor 450 and may control the fingerprint recognition sensor 410 to operate in a touch mode or a swipe mode.

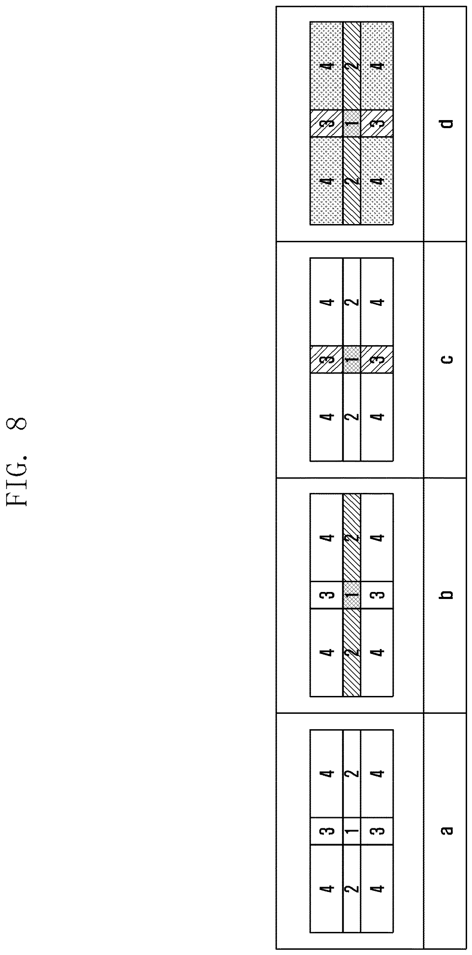

FIG. 8 is a diagram illustrating an example of setting a fingerprint sensing array of a fingerprint recognition sensor according to various embodiments of the present disclosure.

Referring to part (a) of FIG. 8, when there is no user's fingerprint input in the fingerprint recognition sensor 410, the processor 450 may control all of the first to fourth arrays 1 to 4 of the fingerprint recognition sensor 410 to be in an inactivated state.

Referring to part (b) of FIG. 8, when a user's drag input is entered into the fingerprint recognition sensor 410 in a second direction (e.g., a vertical direction), the processor 450 may control the first and second arrays 1 and 2, disposed in a first direction (e.g., a horizontal direction) to be activated.

Referring to part (c) of FIG. 8, when a user's drag input is entered into the fingerprint recognition sensor 410 in the first direction (e.g., the horizontal direction), the processor 450 may control the first and third arrays 1 and 3, disposed in the second direction (e.g., the vertical direction) to be activated.

Referring to part (d) of FIG. 8, when there is a user's touch input of pressing the fingerprint recognition sensor 410 for a predetermined time, the processor 450 may control all of the first to fourth arrays 1 to 4 to be activated.

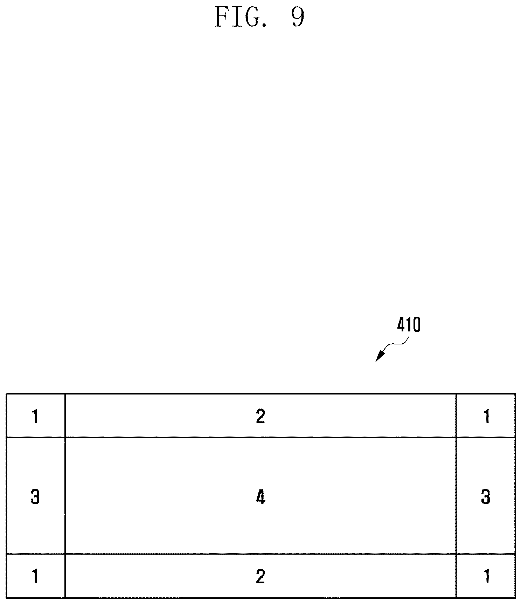

FIG. 9 is a diagram illustrating another a configuration of a sensing array of a fingerprint recognition sensor according to various embodiments of the present disclosure.

Referring to FIG. 9, the fingerprint recognition sensor 410 may include a fingerprint sensing array divided into a plurality of sensing regions. For example, the fingerprint sensing array of the fingerprint recognition sensor 410 may include a fourth array 4 disposed centrally, a third array 3 disposed leftward and rightward from the fourth array 4, a second array 2 disposed upward and downward from the fourth array 4, and a first array 1 disposed at four corners around the fourth array 4. The respective sensing arrays (e.g., the first to fourth arrays 1 to 4) may have different sensing characteristics.

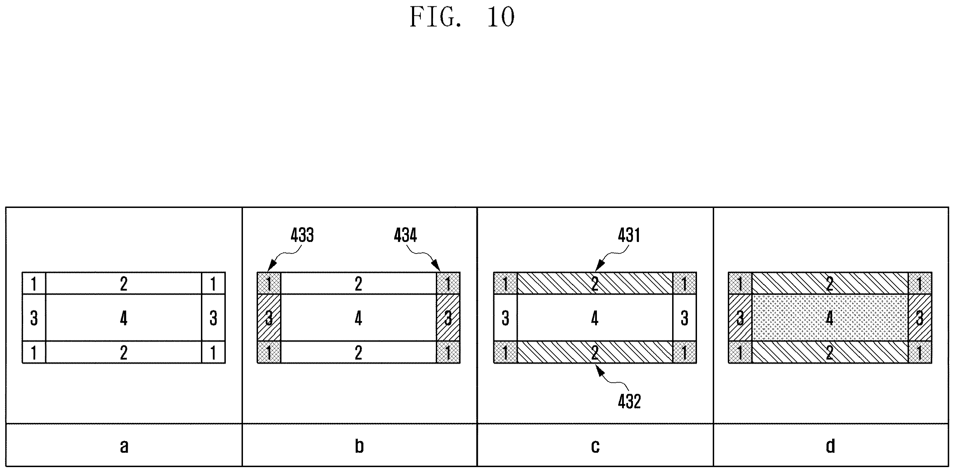

FIG. 10 is a diagram illustrating another example of setting a fingerprint sensing array of a fingerprint recognition sensor according to various embodiments of the present disclosure.

Referring to part (a) of FIG. 10, when there is no user's fingerprint input in the fingerprint recognition sensor 410, the processor 450 may control all of the first to fourth arrays 1 to 4 of the fingerprint recognition sensor 410 to be in an inactivated state.

Referring to part (b) of FIG. 10, when the fingerprint recognition sensor 410 operates in a swipe sensing mode in which there is a drag input in a first direction (e.g., a horizontal direction), the processor 450 may control a left array region 433 and a right array region 434 to be activated. Here, the left array region 433 includes the first and third arrays 1 and 3 disposed leftward from the fourth array 4, and the right array region 434 includes the first and third arrays 1 and 3 disposed rightward from the fourth array 4.

In this case, the processor 450 may control the left array region 433 to operate as a reference scan line for measuring a swipe speed when a user's fingerprint input is entered into the fingerprint recognition sensor 410. Namely, by comparing data of the left array region 433 with data of the right array region 434 spaced apart from the left array region 433, the processor 450 may measure a swipe speed of the user's fingerprint input.

Referring to part (c) of FIG. 10, when the fingerprint recognition sensor 410 operates in a swipe sensing mode in which there is a drag input in a second direction (e.g., a vertical direction), the processor 450 may control an upper array region 431 and a lower array region 432 to be activated. Here, the upper array region 431 includes the first and second arrays 1 and 2 disposed upward from the fourth array 4, and the lower array region 432 includes the first and second arrays 1 and 2 disposed downward from the fourth array 4.

In this case, the processor 450 may control the upper array region 431 to operate as a reference scan line for measuring a swipe speed when a user's fingerprint input is entered into the fingerprint recognition sensor 410. Namely, by comparing data of the upper array region 431 with data of the lower array region 432 spaced apart from the upper array region 431, the processor 450 may measure a swipe speed of the user's fingerprint input.

Referring to part (d) of FIG. 10, when there is a user's touch input of pressing the fingerprint recognition sensor 410 for a predetermined time, the processor 450 may control all of the first to fourth arrays 1 to 4 to be activated.

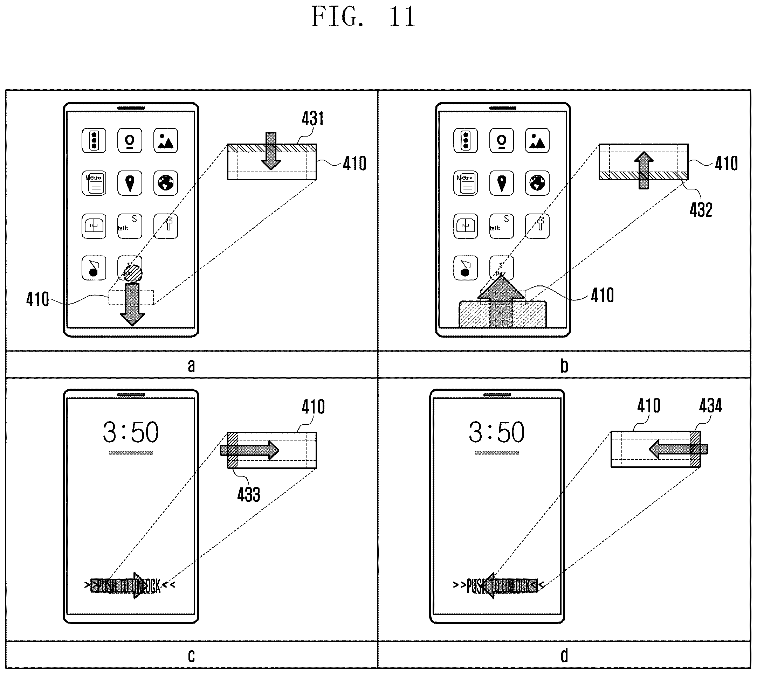

FIG. 11 is a diagram illustrating an example of setting a sensing array, when a fingerprint recognition sensor operates in a swipe sensing mode according to various embodiments of the present disclosure.

When the fingerprint recognition sensor 410 operates in a swipe sensing mode in the configuration of the sensing array of the fingerprint recognition sensor 410 as shown in FIG. 9, the processor 450 may control a particular array region of the sensing array close to a fingerprint input to be activated. The sensing array of the fingerprint recognition sensor 410 is composed of a plurality of lines for receiving fingerprint images. The processor 450 may check the overlap of images received from such lines of the sensing array, calculate a swipe speed, remove overlapped fingerprint images from the respective lines, and thereby extract an original fingerprint image.

Referring to part (a) of FIG. 11, when a user's fingerprint input is detected as a swipe input that is approaching the top of the fingerprint recognition sensor 410, the processor 450 may control the upper array region 431 disposed at the top of the fingerprint recognition sensor 410 to be activated for sensing a fingerprint.

Referring to part (b) of FIG. 11, when a user's fingerprint input is detected as a swipe input that is approaching the bottom of the fingerprint recognition sensor 410, the processor 450 may control the lower array region 432 disposed at the bottom of the fingerprint recognition sensor 410 to be activated for sensing a fingerprint.

Referring to part (c) of FIG. 11, when a user's fingerprint input is detected as a swipe input that is approaching the left of the fingerprint recognition sensor 410, the processor 450 may control the left array region 433 disposed at the left of the fingerprint recognition sensor 410 to be activated for sensing a fingerprint.

Referring to part (d) of FIG. 11, when a user's fingerprint input is detected as a swipe input that is approaching the right of the fingerprint recognition sensor 410, the processor 450 may control the right array region 434 disposed at the right of the fingerprint recognition sensor 410 to be activated for sensing a fingerprint.

Referring to (a) to (d) of FIG. 11, the processor 450 may control only the particular sensing array to be activated according to the direction in which the user swipes the fingerprint recognition sensor 410 for a fingerprint input. It is therefore possible to optimally operate the sensor mode and minimize power consumption of the fingerprint recognition sensor 410.

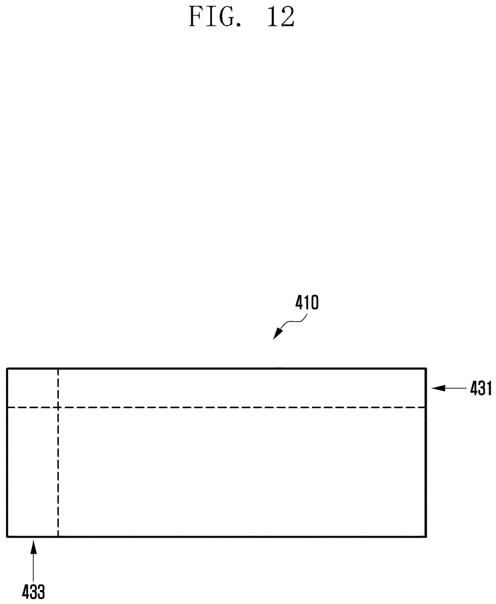

FIG. 12 is a diagram illustrating a configuration of a sensing array of a fingerprint recognition sensor according to various embodiments of the present disclosure.

Referring to FIG. 12, the fingerprint recognition sensor 410 may include a fingerprint sensing array divided into a plurality of sensing regions. For example, in the fingerprint sensing array, the upper array region 431 and the left array region 433 may be selectively activated under the control of the processor 450.

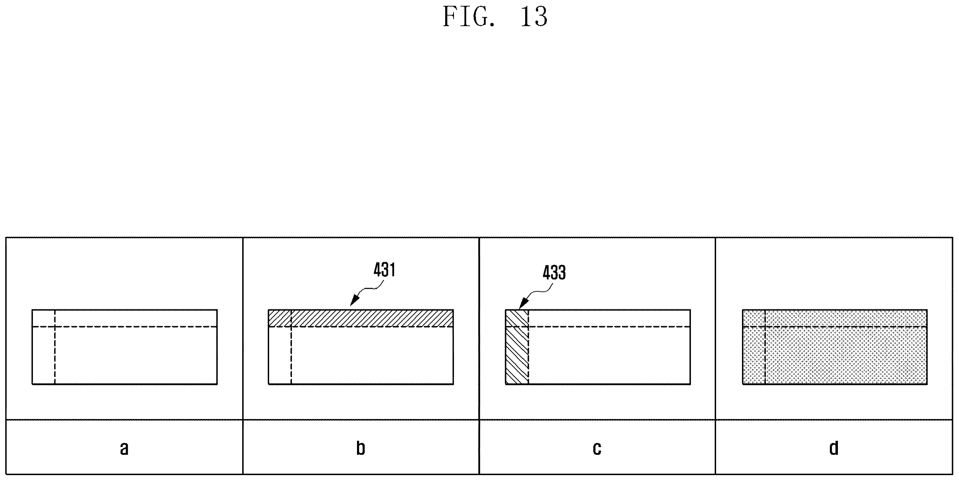

FIG. 13 is a diagram illustrating an example of setting a fingerprint sensing array of a fingerprint recognition sensor according to various embodiments of the present disclosure.

Referring to part (a) of FIG. 13, when there is no user's fingerprint input in the fingerprint recognition sensor 410, the processor 450 may control all of the sensing arrays of the fingerprint recognition sensor 410 to be in an inactivated state.

Referring to part (b) of FIG. 13, when the fingerprint recognition sensor 410 operates in a swipe sensing mode in which there is a drag input in a second direction (e.g., a vertical direction), the processor 450 may control the upper array region 431 to be activated.

Referring to part (c) of FIG. 13, when the fingerprint recognition sensor 410 operates in a swipe sensing mode in which there is a drag input in a first direction (e.g., a horizontal direction), the processor 450 may control the left array region 433 to be activated.

Referring to part (d) of FIG. 13, when there is a user's touch input of pressing the fingerprint recognition sensor 410 for a predetermined time, the processor 450 may control all of the sensing arrays to be activated.

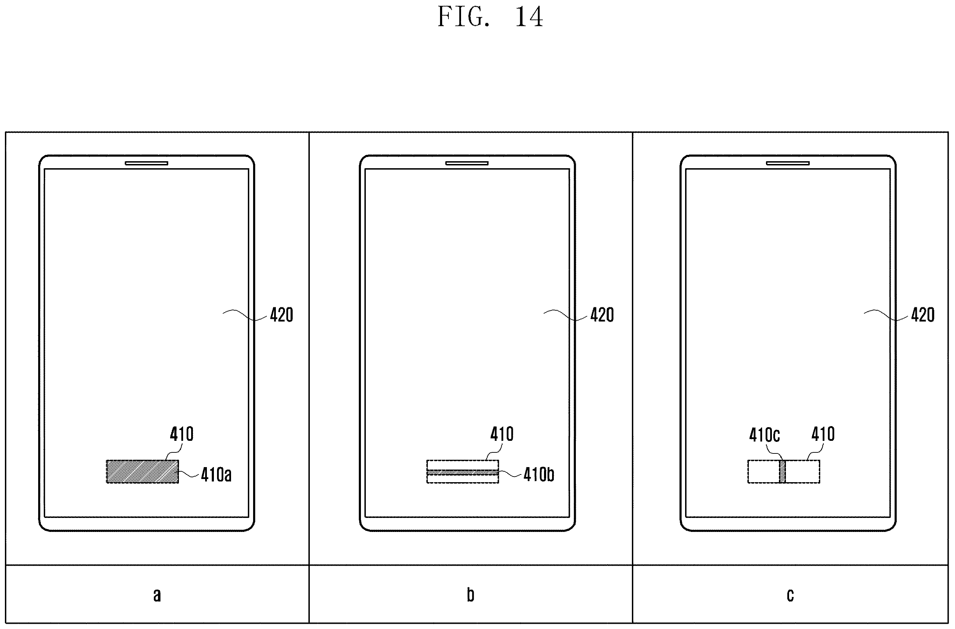

FIG. 14 is a diagram illustrating a guide to a touch sensing mode or a swipe sensing mode according to various embodiments of the present disclosure.

Referring to FIG. 14, depending on sensing modes of the fingerprint recognition sensor 410, the processor 450 may provide different-shaped guides to the respective sensing modes through the touch screen 420.

Referring to part (a) of FIG. 14, when the fingerprint recognition sensor 410 operates in the touch sensing mode, the processor 450 may display, through the touch screen 420, a guide UI 410a corresponding to the entire activated region of the fingerprint recognition sensor 410.

Referring to parts (b) and (c) of FIG. 14, when the fingerprint recognition sensor 410 operates in the swipe sensing mode, the processor 450 may display, through the touch screen 420, other guide UIs 410b and 410c each corresponding to a partial activated region of the fingerprint recognition sensor 410.

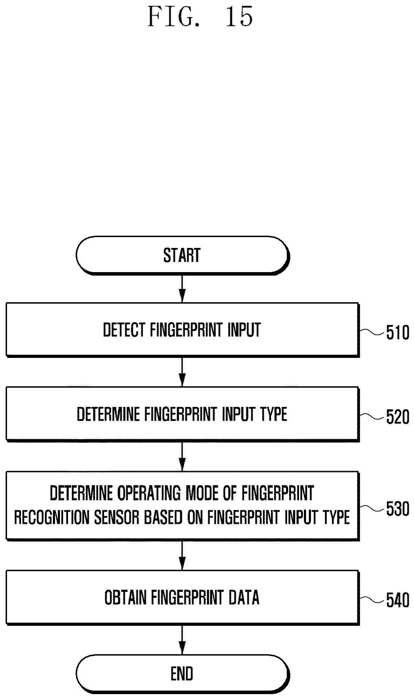

FIG. 15 is a flow diagram illustrating a method for controlling an electronic device having a plurality of fingerprint sensing modes according to various embodiments of the present disclosure.

Referring to FIG. 15, at operation 510, the fingerprint recognition sensor 410 disposed in the touch screen 420 of the electronic device 400 may detect a user's fingerprint input. Then, for fingerprint sensing, the processor 450 may receive the fingerprint input from the fingerprint recognition sensor 410.

At operation 520, the processor 450 may determine the type of the fingerprint input received from the fingerprint recognition sensor 410.

According to one embodiment, the processor 450 may determine that the fingerprint input is a drag input that moves in a second direction (e.g., a vertical direction) toward the fingerprint sensing array of the fingerprint recognition sensor 410. According to one embodiment, the processor 450 may determine that the fingerprint input is a drag input that moves in a first direction (e.g., a horizontal direction) toward the fingerprint sensing array of the fingerprint recognition sensor 410. According to one embodiment, the processor 450 may determine that the fingerprint input is a touch input that presses the fingerprint recognition sensor 410 for a predetermined time without dragging.

At operation 530, the processor 450 may determine an operating mode of the fingerprint recognition sensor 410, based on the fingerprint input type.

According to one embodiment, if the fingerprint input is an input moving in the vertical direction toward the fingerprint recognition sensor 410, the processor 450 may control the fingerprint recognition sensor 410 to operate in a vertical swipe scan mode by activating the upper array region 431 of the fingerprint recognition sensor 410.

According to one embodiment, if the fingerprint input is an input moving in the horizontal direction toward the fingerprint recognition sensor 410, the processor 450 may control the fingerprint recognition sensor 410 to operate in a horizontal swipe scan mode by activating the left array region 433 of the fingerprint recognition sensor 410.

According to one embodiment, if the fingerprint input is a touch input pressing the fingerprint recognition sensor 410 for a predetermined time, the processor 450 may control the fingerprint recognition sensor 410 to operate in a touch scan mode by activating all the sensor arrays of the fingerprint recognition sensor 410.

At operation 540, the fingerprint recognition sensor 410 may obtain user's fingerprint information depending on the operating mode of the processor 450.

According to one embodiment, when the processor 450 operates in the vertical or horizontal swipe scan mode, the fingerprint recognition sensor 410 may obtain fingerprint information by continuously scanning a user's fingerprint image a predetermined number of times.

According to one embodiment, when the processor 450 operates in the touch scan mode, the fingerprint recognition sensor 410 may obtain fingerprint information by scanning a user's fingerprint image at one time.

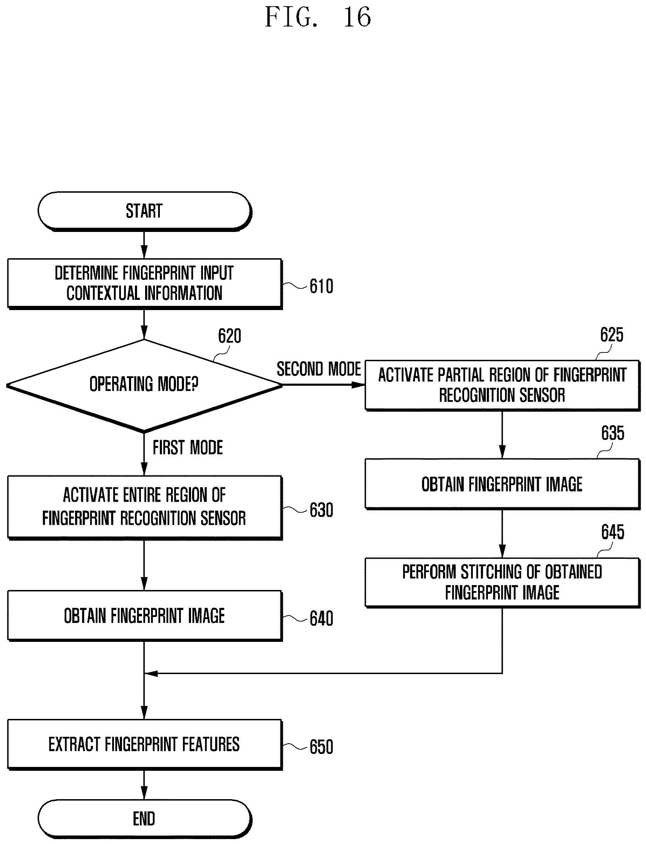

FIG. 16 is a flow diagram of a method for controlling an electronic device having a plurality of fingerprint sensing modes according to various embodiments of the present disclosure.

Referring to FIG. 16, at operation 610, the processor 450 may determine contextual information about a fingerprint input of the fingerprint recognition sensor 410 disposed in the touch screen 420 of the electronic device 400.

According to one embodiment, if the contextual information about the fingerprint input satisfies a first condition, the processor 450 may control the fingerprint recognition sensor 410 to operate in a first sensing mode (e.g., a touch mode).

According to one embodiment, if the contextual information satisfies a second condition, the processor 450 may control the fingerprint recognition sensor 410 to operate in a second sensing mode (e.g., a swipe mode).

According to one embodiment, the first condition may be defined as a condition that the user presses the fingerprint recognition sensor 410 for a predetermined time without dragging. Also, the second condition may be defined as a condition that the user drags toward the fingerprint recognition sensor 410 in the vertical direction or the horizontal direction.

According to another embodiment, the first condition may be defined as a condition that security authentication is performed by an application whose security level of requesting a user's fingerprint input is lower than a given level. Also, the second condition may be defined as a condition that security authentication is performed by an application whose security level of requesting a user's fingerprint input is greater than a given level.

At operation 620, the processor 450 may determine an operating mode of the fingerprint recognition sensor 410 in accordance with the determined contextual information.

According to one embodiment, the processor 450 may determine the operating mode (e.g., a first mode or a second mode) of the fingerprint recognition sensor 410 by determining whether the user's fingerprint input is a touch type of pressing the fingerprint recognition sensor 410 for a predetermined time without dragging or a swipe type of dragging toward the fingerprint recognition sensor 410 in the vertical direction or the horizontal direction.

According to another embodiment, the processor 450 may determine the operating mode (e.g., a first mode or a second mode) of the fingerprint recognition sensor 410 by identifying a security level of an application requiring a fingerprint input and then comparing the identified security level with a given level.

If the operating mode determined at operation 620 is the first mode (e.g., a touch mode), the processor 450 may control the fingerprint recognition sensor 410 to operate in a touch scan mode at operation 630 by activating the entire region of the sensing array of the fingerprint recognition sensor 410 as shown, for example, in part (d) of FIG. 13.

At operation 640, the fingerprint recognition sensor 410 may obtain a user's fingerprint image in the touch scan mode.

At operation 650, the processor 450 may extract fingerprint features such as crest or trough of the fingerprint from the fingerprint image obtained in the touch scan mode.

On the other hand, if the operating mode determined at operation 620 is the second mode (e.g., a swipe mode), the processor 450 may control the fingerprint recognition sensor 410 to operate in a swipe scan mode at operation 625 by activating a partial region of the sensing array of the fingerprint recognition sensor 410 as shown, for example, in parts (b) and (c) of FIG. 13.

At operation 635, the fingerprint recognition sensor 410 may obtain a user's fingerprint image in the swipe scan mode.

At operation 645, the processor 450 may perform stitching of the images to remove line-by-line overlaps of the sensing array from the fingerprint image. Then, at operation 650, the processor 450 may extract fingerprint features such as the crest or the trough of the fingerprint.

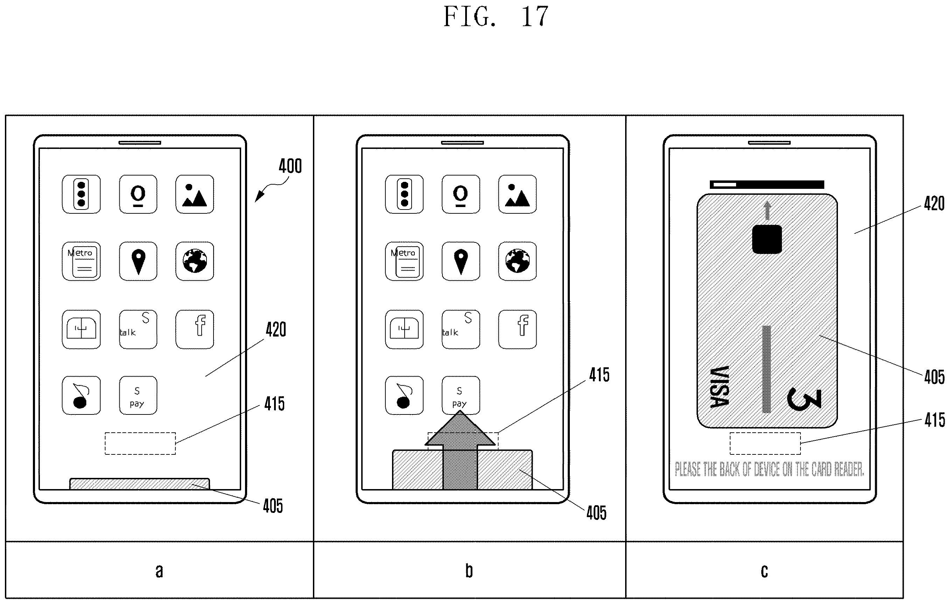

FIG. 17 is a diagram illustrating a method for controlling an electronic device having a graphical object requiring security authentication according to various embodiments of the present disclosure.

Referring to part (a) of FIG. 17, a certain graphical object 405 (e.g., a credit card for payment) that requires security authentication is disposed at one region of the touch screen 420 which is remote from a fingerprint recognition sensor region 415 of the touch screen 420.

Referring to part (b) of FIG. 17, the user may touch the graphical object 405 and then drag it in the vertical direction toward the fingerprint recognition sensor region 415. Namely, the user may swipe the fingerprint recognition sensor 410 disposed in the fingerprint recognition sensor region 415. In this case, the processor 450 may control the fingerprint recognition sensor 410 to operate in a swipe scan mode by activating a partial region of the sensing array of the fingerprint recognition sensor 410 as shown, for example, in parts (b) and (c) of FIG. 13.

According to one embodiment, when the graphical object 405 is touch-and-dragged in the vertical direction through the fingerprint recognition sensor region 415, the fingerprint recognition sensor 410 may scan a user's fingerprint and obtain fingerprint information. The processor 450 may compare the obtained fingerprint information with corresponding user's fingerprint information stored in the memory 440.

Referring to part (c) of FIG. 17, if the fingerprint information is identical and determined to be the same user, the processor 450 may perform authentication of a security function corresponding to the selected graphical object 405, display the authentication result on the touch screen 420, and perform a subsequent operation.

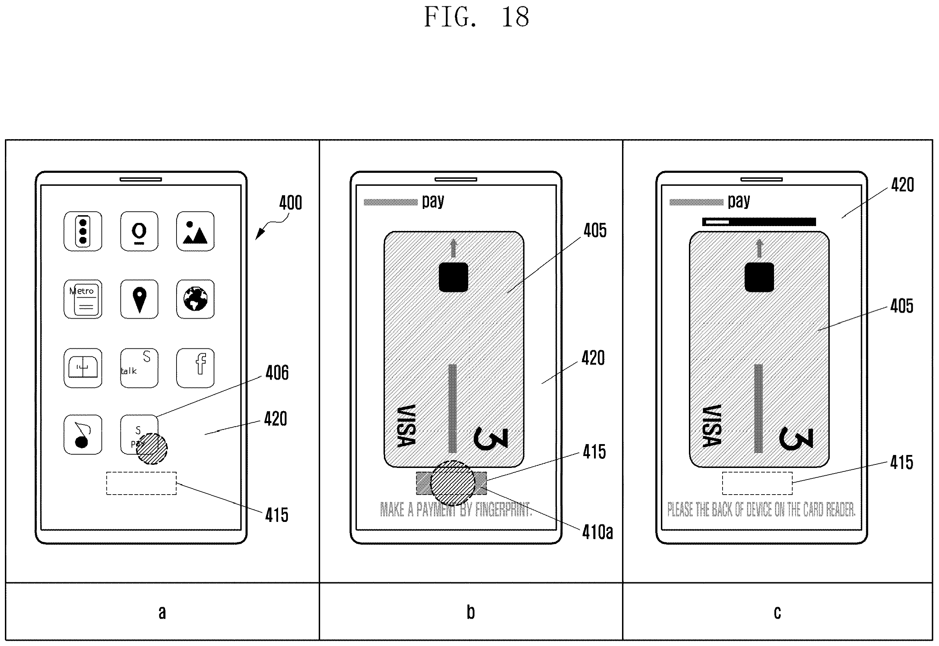

FIG. 18 is a diagram illustrating a method for controlling an electronic device according to various embodiments of the present disclosure.

Referring to part (a) of FIG. 18, the user may select a certain icon 406 that is linked to a particular function (e.g., payment) requiring security authentication and is disposed at one region of the touch screen 420.

Referring to part (b) of FIG. 18, the processor 450 may display a guide UI (e.g., 410a in FIG. 14) in or near the fingerprint recognition sensor region 415 to require the user to enter a fingerprint.

According to one embodiment, when the user enters a fingerprint by pressing the fingerprint recognition sensor region 415, the processor 450 may control the fingerprint recognition sensor 410 to operate in a touch scan mode by activating the entire region of the sensing array of the fingerprint recognition sensor 410 as shown, for example, in part (d) of FIG. 13.

According to one embodiment, when operating in the touch scanmode, the fingerprint recognition sensor 410 may scan a user's fingerprint and obtain fingerprint information. The processor 450 may compare the obtained fingerprint information with corresponding user's fingerprint information stored in the memory 440.

Referring to part (c) of FIG. 18, if the fingerprint information is identical and determined to be the same user, the processor 450 may perform authentication of a security function linked to the selected icon 406, display the graphical object 405 corresponding to the authentication result on the touch screen 420, and perform a subsequent operation.

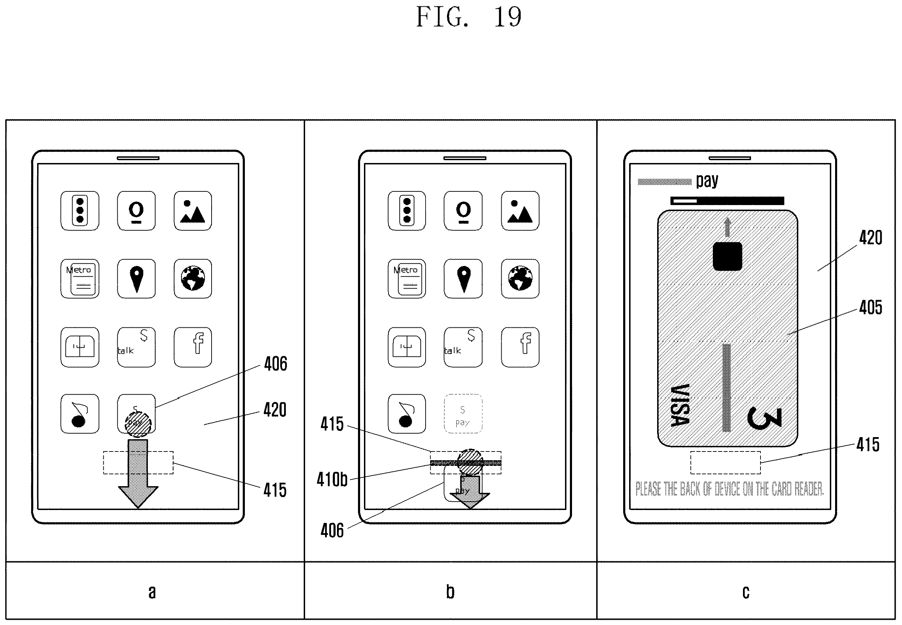

FIG. 19 is a diagram illustrating a method for controlling an electronic device according to various embodiments of the present disclosure.

Referring to part (a) of FIG. 19, the user may touch the icon 406 linked to a particular function (e.g., payment) requiring security authentication and disposed at one region of the touch screen 420, and then drag the icon 406 toward the fingerprint recognition sensor region 415.

Referring to part (b) of FIG. 19, the user may drag the touched icon 406 in the vertical direction to the fingerprint recognition sensor region 415. Namely, the user may swipe the fingerprint recognition sensor 410 disposed in the fingerprint recognition sensor region 415. In this case, the processor 450 may control the fingerprint recognition sensor 410 to operate in a swipe scan mode by activating a partial region of the sensing array of the fingerprint recognition sensor 410 as shown, for example, in parts (b) and (c) of FIG. 13.

According to an embodiment, when the icon 406 linked to a particular function (e.g., payment) requiring security authentication is touched, the processor 450 may display a guide UI (e.g., the guide UI 410b in FIG. 14) in the fingerprint recognition sensor region 415 to require the user to enter a fingerprint.

According to one embodiment, when the icon 406 is dragged in the vertical direction through the fingerprint recognition sensor region 415, the fingerprint recognition sensor 410 may scan a user's fingerprint and obtain fingerprint information. The processor 450 may compare the obtained fingerprint information with corresponding user's fingerprint information stored in the memory 440.

Referring to part (c) of FIG. 19, if the fingerprint information is identical and determined to be the same user, the processor 450 may perform authentication of a security function linked to the selected icon 406, display the graphical object 405 corresponding to the authentication result on the touch screen 420, and perform a subsequent operation.

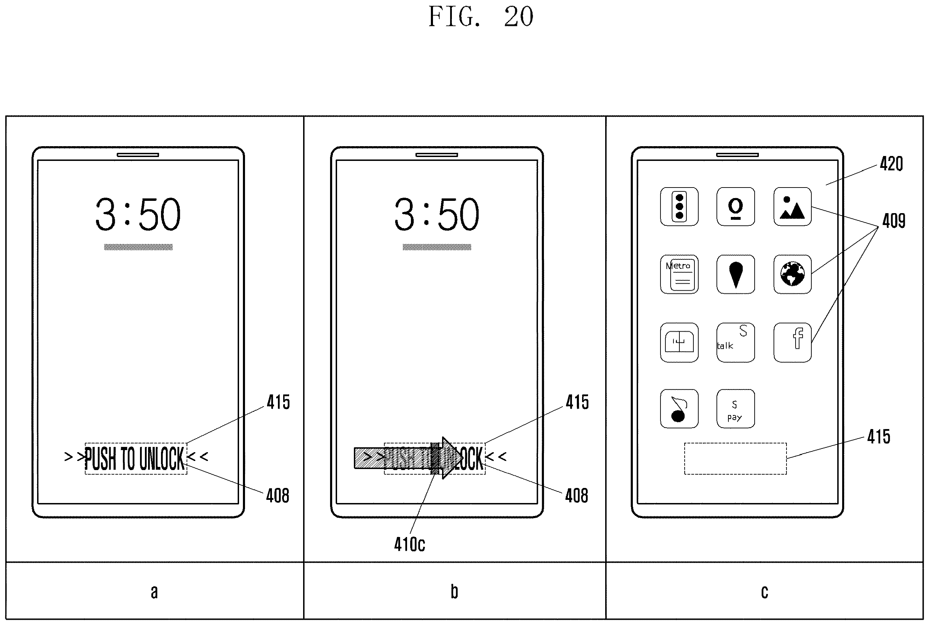

FIG. 20 is a diagram illustrating a method for controlling an electronic device according to various embodiments of the present disclosure.

Referring to part (a) of FIG. 20, the processor 450 may display a graphical object 408 (e.g., a push to unlock) for unlocking the screen in the fingerprint recognition sensor region 415.

Referring to part (b) of FIG. 20, the user may touch and drag the graphical object 408 in the horizontal direction through the fingerprint recognition sensor region 415. Namely, the user may swipe the fingerprint recognition sensor 410 disposed in the fingerprint recognition sensor region 415. In this case, the processor 450 may control the fingerprint recognition sensor 410 to operate in a swipe scan mode by activating a partial region of the sensing array of the fingerprint recognition sensor 410 as shown, for example, in part (c) of FIG. 13.

According to one embodiment, when the graphical object 408 is touched, the processor 450 may display a guide UI (e.g., the guide UI 410c in FIG. 14) in the fingerprint recognition sensor region 415 to require the user to enter a fingerprint. According to one embodiment, when the graphical object 408 is dragged in the horizontal direction through the fingerprint recognition sensor region 415, the fingerprint recognition sensor 410 may scan a user's fingerprint and obtain fingerprint information. The processor 450 may compare the obtained fingerprint information with corresponding user's fingerprint information stored in the memory 440.

Referring to part (c) of FIG. 20, if the fingerprint information is identical and determined to be the same user, the processor 450 may unlock the electronic device 400, display a plurality of UIs 409 such as icons linked to particular functions on the touch screen 420, and perform a subsequent operation.

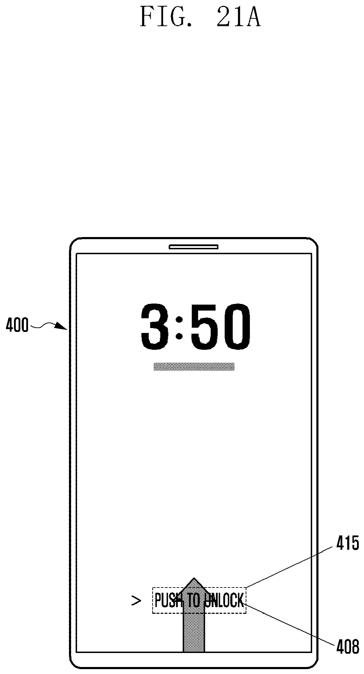

FIGS. 21A to 21D are diagrams illustrating a method for controlling an electronic device according to various embodiments of the present disclosure.

Referring to FIG. 21A, the processor 450 may display the graphical object 408 (e.g., a push to unlock) in the fingerprint recognition sensor region 415.

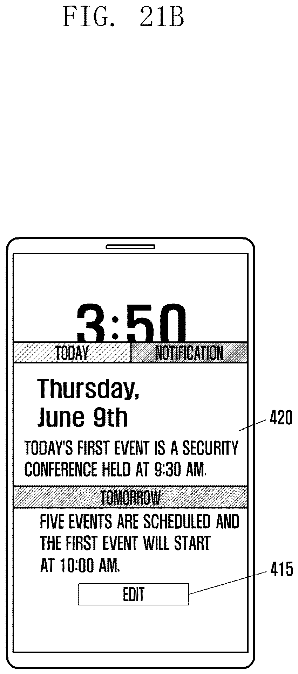

In addition, when the fingerprint recognition sensor 410 operates in a swipe scan mode as the user swipes the fingerprint recognition sensor region 415 in the lock screen state of the electronic device 400, the fingerprint recognition sensor 410 may scan a user's fingerprint and obtain fingerprint information. The processor 450 may compare the obtained fingerprint information with corresponding user's fingerprint information stored in the memory 440. Referring to FIG. 21B, when the fingerprint information is identical and determined to be the same user, the processor 450 may display an additional information screen including the user's personal information (e.g., schedule information, received messages, missed call information, etc.) on the touch screen 420, and perform a subsequent operation.

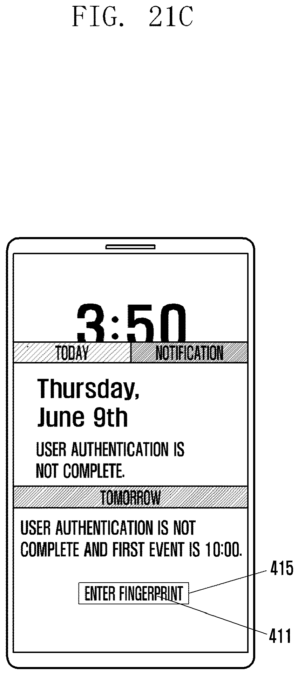

Referring to FIG. 21C, if the obtained fingerprint information is not identical to the stored fingerprint information, if the fingerprint information obtained for comparison is not sufficient, or if the user's fingerprint input is made out of the sensing regions of the fingerprint recognition sensor 410, the processor 450 may hide the user's personal information and display only time and date information. Further, the processor 450 may display a graphical object 411 for requiring a user's fingerprint input in the fingerprint recognition sensor region 415.

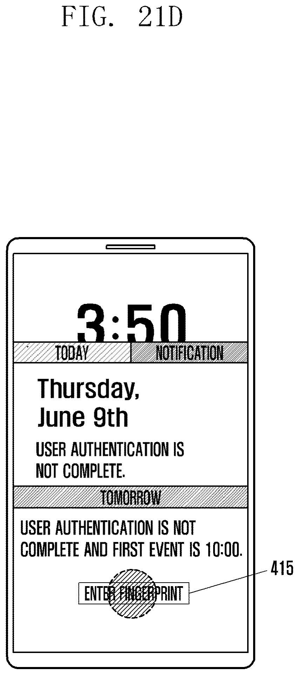

Referring to FIG. 21D, if a user's input is detected from the fingerprint recognition sensor region 415, the processor 450 may control the fingerprint recognition sensor 410 to operate in a touch scan mode or a swipe scan mode depending on the detected user input.

According to one embodiment, when operating in the touch scan mode or the swipe scan mode, the fingerprint recognition sensor 410 may scan a user's fingerprint and obtain fingerprint information. The processor 450 may compare the obtained fingerprint information with corresponding user's fingerprint information stored in the memory 440.

Referring to FIG. 21B, if the fingerprint information is identical and determined to be the same user, the processor 450 may display the additional information screen including user's personal information (e.g., schedule information, received messages, missed call information, etc.) on the touch screen 420, and perform a subsequent operation.

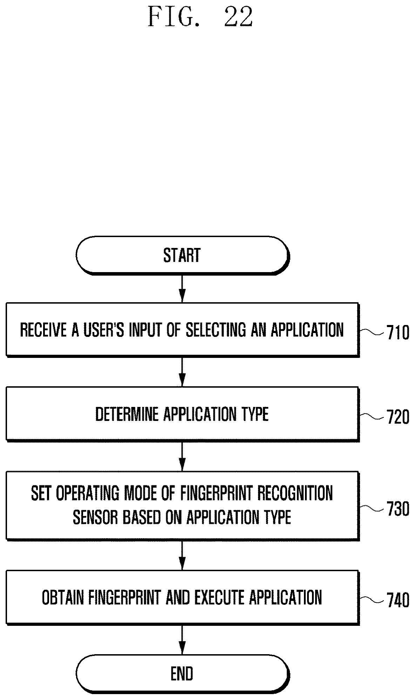

FIG. 22 is a flow diagram of a method for controlling an electronic device in case of executing an application according to various embodiments of the present disclosure.

Referring to FIG. 22, at operation 710, the processor 450 may receive a user's input of selecting an application.

At operation 720, the processor 450 may determine an application type, namely, whether the selected application requires a swipe type input or a touch type input as an input type of the fingerprint recognition sensor 410.

At operation 730, the processor 450 may set the operating mode of the fingerprint recognition sensor 410, based on the determined application type. Namely, if the selected application requires a swipe type input as an input type of the fingerprint recognition sensor 410, the processor 450 may set the operating mode of the fingerprint recognition sensor 410 as a swipe sensing mode. If the selected application requires a touch type input as an input type of the fingerprint recognition sensor 410, the processor 450 may set the operating mode of the fingerprint recognition sensor 410 as a touch sensing mode.

At operation 740, the processor 450 may obtain a user's fingerprint from the fingerprint recognition sensor 410 operating in the swipe sensing mode or the touch sensing mode, and then execute the corresponding application.

According to one embodiment, the processor 450 may determine the operating mode of the fingerprint recognition sensor 410 at a corresponding application layer. In addition, the processor 450 may control the fingerprint recognition sensor 410 to operate in an appropriate sensing mode according to the type of application being executed in a framework layer of the fingerprint recognition sensor 410, and may also provide a suitable UI. For example, the processor 450 may control the fingerprint recognition sensor 410 to operate in the swipe mode when executing a payment application related to financial settlement, and control the fingerprint recognition sensor 410 to operate in the touch mode when executing any other application.

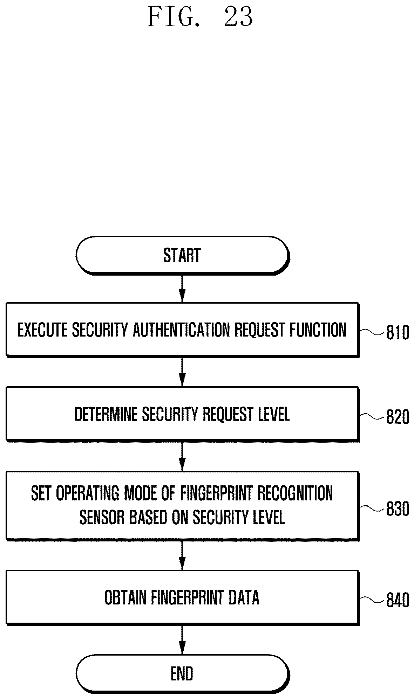

FIG. 23 is a flow diagram of a method of controlling an electronic device based on a security authentication request level according to various embodiments of the present disclosure.

Referring to FIG. 23, the processor 450 of the electronic device 400 may control the operating mode of the fingerprint recognition sensor 410 based on the security authentication request level.

According to one embodiment, the fingerprint recognition sensor 410 may have higher security reliability by operating in the swipe mode because fingerprint sensing of the swipe mode can obtain much more fingerprint information at one time than fingerprint sensing of the touch mode.

At operation 810, the processor 450 of the electronic device 400 may execute a particular function or application that requires a security authentication of the user of the electronic device 400.

At operation 820, the processor 450 may determine whether the security authentication request level of the particular function or application is higher or lower than a given level.

At operation 830, if the security authentication request level is higher, the processor 450 may set the operating mode of the fingerprint recognition sensor 410 as the swipe sensing mode. If the security authentication request level is lower, the processor 450 may set the operating mode of the fingerprint recognition sensor 410 as the touch sensing mode.

At operation 840, the processor 450 may obtain user's fingerprint information in accordance with the security authentication request level.

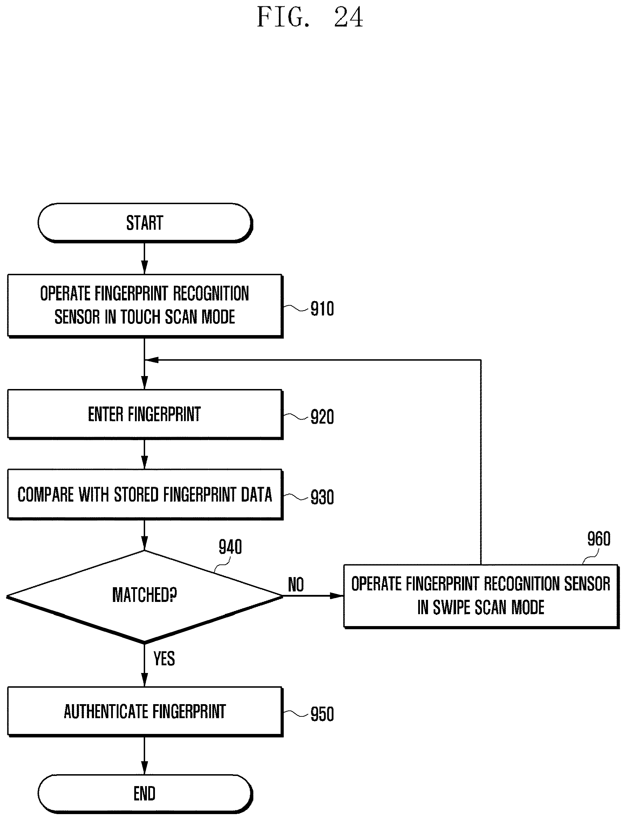

FIG. 24 is a flow diagram illustrating a method for performing fingerprint authentication through a plurality of fingerprint sensing modes in an electronic device according to various embodiments of the present disclosure.

Referring to FIG. 24, at operation 910, the processor 450 may control the fingerprint recognition sensor 410 to operate in a touch scan mode.

At operation 920, the processor 450 may receive a fingerprint input of the user of the electronic device 400 through the touch scan mode.

At operation 930, the processor 450 may compare the received fingerprint input with corresponding user's fingerprint information stored in the memory 440.

At operation 940, the processor 450 may determine a matching result between the received fingerprint input and the stored fingerprint information.

If it is determined at operation 940 that the matching result between the received fingerprint input and the stored fingerprint information has a value within a predetermined range, the processor 450 may authenticate a user's fingerprint at operation 950.

If it is determined at operation 940 that the matching result between the received fingerprint input and the stored fingerprint information has a value out of the predetermined range, the processor 450 may control the fingerprint recognition sensor 410 to operate in a swipe scan mode at operation 960.

After the operation 960, the operations 920 to 940 are repeated.

Accordingly, according to various embodiments of the present disclosure, the processor 450 may provide various UI environments for obtaining fingerprint information by controlling the fingerprint recognition sensor 410 to operate in the swipe scan mode or the touch scan mode. In addition, by providing an optimal sensing mode according to the swipe scan mode or the touch scan mode of the fingerprint recognition sensor 410, it is possible to improve the quality of the scanned fingerprint image in each scan mode.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a touch screen;
a fingerprint recognition sensor disposed on a region of the touch screen; and
a processor configured to:
identify contextual information associated with a fingerprint input from the fingerprint recognition sensor,
when the contextual information satisfies a first condition, activate the fingerprint recognition sensor to operate in a first sensing mode and obtain fingerprint information from the fingerprint recognition sensor based on the first sensing mode, and
when the contextual information satisfies a second condition, activate the fingerprint recognition sensor to operate in a second sensing mode and obtain fingerprint information from the fingerprint recognition sensor based on the second sensing mode.

2. The electronic device of claim 1, wherein the fingerprint recognition sensor includes a first region having a first attribute and a second region having a second attribute.

3. The electronic device of claim 2, wherein the processor is further configured to activate the first and second regions in the first sensing mode and to activate the second region in the second sensing mode.

4. The electronic device of claim 2, further comprising:
a driving circuit configured to activate the first and second regions or activate the second region based on instructions from the processor.

5. The electronic device of claim 1, wherein, when the processor identifies the contextual information, the processor is further configured to:
when the fingerprint input corresponds to a touch input in connection with the fingerprint recognition sensor, determine the fingerprint recognition sensor to operate in the first sensing mode, and
when the fingerprint input corresponds to a swipe input in connection with the fingerprint recognition sensor, determine the fingerprint recognition sensor to operate in the second sensing mode.

6. The electronic device of claim 1, wherein, when the processor identifies the contextual information, the processor is further configured to:
when an attribute of an application requesting fingerprint authentication corresponds to a first attribute, determine the fingerprint recognition sensor to operate in the first sensing mode, and
when the attribute of the application corresponds to a second attribute, determine the fingerprint recognition sensor to operate in the second sensing mode.

7. The electronic device of claim 1, wherein the fingerprint recognition sensor is disposed below the region of the touch screen.

8. The electronic device of claim 1, wherein the fingerprint recognition sensor is disposed between pixels contained in the region of the touch screen.

9. A method for controlling an electronic device having a touch screen, a fingerprint recognition sensor disposed on a region of the touch screen, and a processor, the method comprising:
identifying contextual information associated with a fingerprint input of the fingerprint recognition sensor;
when the contextual information satisfies a first condition, determining to operate the fingerprint recognition sensor in a first sensing mode;
when the contextual information satisfies a second condition, determining to operate the fingerprint recognition sensor in a second sensing mode; and
obtaining fingerprint information from the fingerprint input through the fingerprint recognition sensor.

10. The method of claim 9, wherein the obtaining of the fingerprint information comprises:
obtaining the fingerprint information by scanning a single time for a fingerprint image corresponding to the fingerprint based on the first sensing mode; and
obtaining the fingerprint information by continuously scanning for a fingerprint image corresponding to the fingerprint based on the second sensing mode.

11. The method of claim 9, wherein the identifying of the contextual information comprises:
when the fingerprint input corresponds to a touch input in connection with the fingerprint recognition sensor, determining to operate the fingerprint recognition sensor in the first sensing mode; and
if the fingerprint input corresponds to a swipe input in connection with the fingerprint recognition sensor, determining to operate the fingerprint recognition sensor in the second sensing mode.

12. The method of claim 9,
wherein the fingerprint recognition sensor includes a first region having a first attribute and a second region having a second attribute,
wherein the determining to operate the fingerprint recognition sensor in the first sensing mode includes activating the first and second regions, and
wherein the determining to operate the fingerprint recognition sensor in the second sensing mode includes activating only the second region.

13. The method of claim 9, further comprising:
comparing the obtained fingerprint information with fingerprint information stored in a memory of the electronic device; and
when a result of the comparison satisfies a predetermined condition, performing a particular function.

14. The method of claim 9, wherein the identifying of the contextual information includes:
when an attribute of an application requesting fingerprint authentication corresponds to a first attribute, determining to operate the fingerprint recognition sensor in the first sensing mode; and
when the attribute of the application corresponds to a second attribute, determining to operate the fingerprint recognition sensor in the second sensing mode.

15. The method of claim 9, further comprising:
comparing the obtained fingerprint information with fingerprint information stored in a memory of the electronic device;
when a result of the comparison satisfies a predetermined condition performing a particular function; and
when the result of the comparison result fails to satisfy the predetermined condition, determining to operate the fingerprint recognition sensor in the second sensing mode.
